# EUROPEAN PATENT SPECIFICATION

(11) **EP 3 297 064 B1**
(45) Date of publication and mention of the grant of the patent: **24.04.2024**
(21) Application number: 17158094.7
(22) Date of filing: 27.02.2017
(51) Int. Cl.: H01M 4/36, H01M 4/485, H01M 50/103, H01M 50/107, H01M 50/209, H01M 50/213, H01M 50/249, B60L 58/10, H01M 50/105, H01M 50/211, H01M 50/417, H01M 50/466, H01M 50/491

(54) **NONAQUEOUS ELECTROLYTE BATTERY, BATTERY PACK AND VEHICLE**
BATTERIE MIT NICHTWÄSSRIGEM ELEKTROLYTEN, BATTERIEPACK UND FAHRZEUG
BATTERIE ÉLECTROLYTE NON AQUEUSE, BATTERIE ET VÉHICULE

(30) Priority: 16.09.2016 JP 2016182009
(43) Date of publication of application: 21.03.2018
(73) Proprietor: Kabushiki Kaisha Toshiba, Minato-ku Tokyo 105-8001 (JP)
(72) Inventor: Takami, Norio, Tokyo, 105-8001 (JP); Namiki, Yusuke, Tokyo, 105-8001 (JP); Ise, Kazuki, Tokyo, 105-8001 (JP); Harada, Yasuhiro, Tokyo, 105-8001 (JP)
(74) Representative: Hoffmann Eitle

(56) References cited:
- EP-A1- 2 717 364
- EP-A1- 2 980 887
- JP-A- 2003 303 622
- US-A1- 2015 086 840
- US-A1- 2015 221 978

## Description

### FIELD

The present disclosure relates to a nonaqueous electrolyte battery, a battery pack and a vehicle.

### BACKGROUND

A nonaqueous electrolyte battery including a negative electrode including lithium metal, a lithium alloy, a lithium compound, or a carbonaceous material in is expected as a high energy density battery and has been actively studied and developed. There has been widely put into practical use a lithium ion battery comprising a positive electrode containing LiCoO₂, LiNi_{1/3}Co_{1/3}Mn_{1/3}O₂, or LiMn₂O₄ as an active material and a negative electrode containing a carbonaceous material which allows lithium ions to be inserted in and extracted from. In the negative electrode, a metal oxide or an alloy instead of the carbonaceous material have been considered.

When the battery is installed in a vehicle such as an automobile and a train, in terms of cycle performance under high-temperature environment (for example, 60°C or more), long-term reliability in high output, and safety, the negative electrode is required to include a material superior in chemical and electrochemical stability, strength, and corrosion resistance. Moreover, the battery is required to have high performance in cold regions. Specifically, the battery is required to have high output performance and long life performance under low-temperature environment (for example, -40°C). On the other hand, the development of a solid electrolyte and a nonvolatile and noninflammable electrolytic solution is underway to improve safety performance as an electrolyte. However, since such an electrolytic solution brings about deterioration in the discharge rate performance, low-temperature performance, and long life performance of a battery, it has not been put to practical use yet.

Therefore, from the foregoing descriptions, it is difficult to mount and use a current lithium ion battery in an engine compartment of an automobile as a substitute for a lead battery. In order to install the lithium ion battery in a vehicle, at least high-temperature durability is required to be improved.

Attention is paid to lithium iron phosphate (for example, LiₓFePO₄) and lithium manganese phosphate (for example, LiₓMnPO₄) which are lithium-phosphorus-containing metal compounds having an olivine crystal structure as positive electrode active materials to improve the performance of the positive electrode, and they improve thermal stability.

On the other hand, in order to reduce battery resistance and increase volume energy density, studies have been made to reduce a distance between a positive electrode and a negative electrode by reducing a thickness of a separator to 10 um or less. However, commercialization is difficult because there are possibilities of an increase in self-discharge rate, a reduction in high-temperature durability, and internal short-circuit.

US 2015/221978 A1 describes a positive electrode mixture including a positive electrode active material represented by the formula aLi₂MnO₃bLiNi_{1-y}M¹_{y}O₂-cLiM²ᵥM³_{w}M⁴ₓO₂, wherein M¹ is one or more elements selected from Co, Mn, Al, Fe, Cu, V, Zn and Cr; M², M³ and M⁴ are independently one or more elements selected fromNi, Co, Mn, Al, Fe, Cu, V, Zn and Cr; M², M³ and M⁴ are elements different from each other; a, b and c satisfy a + b + c = 1, 0 < a < 1, 0 < b < 1 and 0 < c < 1; y satisfies 0 ≤ y ≤ 1; and v, w and x satisfy v + w + x = 1, and satisfy 0 ≤ v ≤ 1, 0 ≤ w ≤ 1 and 0 ≤ x ≤ 1;and a solid electrolyte that comprises Li and S.

EP 2 717 364 A1 relates to positive electrode active material particles for an all-solid-state battery containing a sulfide-based solid electrolyte. The positive electrode active material particles are an aggregate containing two or more particles. The surface of the aggregate is coated with a reaction-suppressing layer for suppressing reactions with the sulfide-based solid electrolyte.

JP 2003-303622 A relates to a battery comprising a wound electrode body in which a positive electrode and a negative electrode are laminated and wound through an electrolyte that contains a polymer material and an insulating particle. The width of the electrolyte is larger than the positive electrode and the negative electrode by 0.5 mm or more and 4 mm or less, so that the positive electrode and the negative electrode are completely covered thereby. It is preferable that the content of the insulating particle is 6 volume % or more and 15 volume % or less. It is further preferable that the average distance between the electrodes is 15 pm or more and 50 pm or less, and the average particle size of the insulating particle is made 0.5 pm or more and 5 pm or less. In the manufacture, after the electrolyte is formed, it is pressurized while heating, thereby, the internal resistance of the electrolyte is reduced, and the insulating particle is dispersed in the electrolyte.

### BRIEF DESCRIPTION OF DRAWINGS

FIG. 1 is a partially cut-out cross-sectional view of a nonaqueous electrolyte battery of an approach;
FIG. 2 is a side view of the nonaqueous electrolyte battery of FIG. 1;
FIG. 3 is a partially cut-out perspective view of the nonaqueous electrolyte battery of the approach;
FIG. 4 is an enlarged cross-sectional view of a B part of FIG. 3;
FIG. 5 is a schematic diagram for explaining a distance between a positive electrode and a negative electrode;
FIG. 6 is a cross-sectional view showing another example of the nonaqueous electrolyte battery according to the approach;
FIG. 7 is a perspective view showing an example of a battery module of the approach;
FIG. 8 is an exploded perspective view of a battery pack of the approach;
FIG. 9 is a block diagram showing an electric circuit of the battery pack of FIG. 8;
FIG. 10 is a schematic diagram showing an example of a vehicle of the approach; and
FIG. 11 is a scanning electron microscope (SEM) photograph showing a positive electrode, a solid electrolyte layer, and a negative electrode in a battery of Example 16.

### DETAILED DESCRIPTION

According to one approach, a nonaqueous electrolyte battery includes a positive electrode, a negative electrode, and a nonaqueous electrolyte. The positive electrode includes positive electrode active material secondary particles and a layer. An average secondary particle size of the positive electrode active material secondary particles is from 3 um to 25 um. The layer covers at least a portion of surfaces of the positive electrode active material secondary particles. The layer contains a lithium titanium oxide and has a thickness of 3 nm to 30 nm. A shortest distance between the positive electrode and the negative electrode is from 3 pm to 12 um. The positive electrode active material secondary particles comprising at least one selected from the group consisting of a lithium manganese composite oxide having a spinel structure represented by LiₓMn₂O₄ where 0 ≤ x ≤ 1, a lithium nickel cobalt manganese composite oxide represented by LiₓNi_{1-e-f}CoₑMn_{f}O₂ where 0 ≤ x ≤ 1.1, 0 < e < 1, 0 < f < 1, a lithium nickel aluminum composite oxide represented by LiₓNi_{1-z-q}Co_{z}Al_{q}O₂ where 0 ≤ x ≤ 1, 0 ≤ z ≤ 1, 0 < q ≤ 0.2, a lithium nickel manganese composite oxide having a spinel structure represented by LiₓNi_{d}Mn_{2-d}O₄ where 0 ≤ x ≤ 1, 0.3 ≤ d ≤ 0.6, a lithium-phosphorus composite oxide having an olivine structure represented by LiₓCoPO₄ where 0 < x ≤ 1, and a phosphate compound having an olivine structure represented by LiₓFe_{1-y-z}Mn_{y}M_{z}PO₄ where M is at least one element selected from the group consisting of Mg, Al, Ti, and Zr, 0 ≤ x ≤ 1.1, 0 ≤ y ≤ 1, 0 ≤ z ≤ 0.2; the nonaqueous electrolyte is a liquid organic electrolyte or a gel organic electrolyte; and
the nonaqueous electrolyte battery further comprises an electrolyte layer (5) facing at least one of the positive electrode (3) and the negative electrode (4), wherein the electrolyte layer (5) comprises the nonaqueous electrolyte and lithium-containing oxide particles consisting of at least one selected from the group consisting of Li₅₊ₓAₓLa₃₋ₓM₂O₁₂ where A is at least one element selected from the group consisting of Ca, Sr, and Ba, M is Nb and/or Ta, and x is in a range of 0.5 or less including 0, Li₃M₂₋ₓL₂O₁₂ where M is Nb and/or Ta, L contains Zr, and x is in a range of 0.5 or less including 0, Li₇₋₃ₓAlₓLa₃Zr₃O₁₂ where x is in a range of 0.5 or less including 0, Li₇La₃Zr₂O₁₂, LiM1₂ (PO₄)₃ where M1 is one or more elements selected from the group consisting of Ti, Ge, Sr, Zr, Sn, and Al, Li₁₊ₓAlₓGe₂₋ₓ(PO₄)₃ where x is in a range of 0 or more to 0.5 or less, Li₁₊ₓAlₓZr₂₋ₓ(PO₄)₃ where x is in a range of 0 or more to 0.5 or less, and Li₁₊ₓAlₓTi₂₋ₓ(PO₄)₃ where x is in a range of 0 or more to 0.5 or less.

Another approach provides a battery pack including the nonaqueous electrolyte battery according to the above approach.

Still another approach provides a vehicle including the battery pack according to the above approach.

According to the approach, there is provided a nonaqueous electrolyte battery superior in high-temperature storage performance and large current performance, a battery pack including the nonaqueous electrolyte battery, and a vehicle including the battery pack.

### (First Approach)

The first approach provides a nonaqueous electrolyte battery including a positive electrode, a negative electrode, and a nonaqueous electrolyte. The positive electrode includes positive electrode active material secondary particles and a covering layer. An average secondary particle size of the positive electrode active material secondary particles is 3 pm or more to 25 um or less. The covering layer covers at least a portion of surfaces of the positive electrode active material secondary particles. The covering layer contains a lithium titanium oxide and has a thickness of 3 nm or more to 30 nm or less. A shortest distance between the positive electrode and the negative electrode is from 3 µm to 12 um.

Here, the shortest distance between the positive electrode and the negative electrode means a shortest distance of distances between a positive electrode active material-containing layer and a negative electrode active material-containing layer. The positive electrode active material-containing layer and the negative electrode active material-containing layer do not have a smooth surface, and each surface has surface roughness reflecting shapes of the active material particles. When a distance from a point where the positive electrode active material-containing layer and the negative electrode active material-containing layer are closest to each other is from 3 µm to 12 µm, battery resistance can be reduced, and, at the same time, a volume energy density of the battery can be improved. A more preferable range is from 3 µm to 10 um. A still more preferable range is from 3 µm to 8 pm or from 3 pm to 5 um. If this distance is too short, even if there is the covering layer, deterioration of the positive electrode active material is accelerated, or an internal short-circuit tends to occur. Thus, the distance is 3 µm or more and preferably 3 um or more to 8 um or less.

In a nonaqueous electrolyte battery in which the shortest distance between the positive electrode and the negative electrode is from 3 pm to 12 um, the battery resistance can be reduced, and, at the same time, the volume energy density of the battery can be improved. When a covering layer containing a lithium titanium oxide and having a thickness of 3 nm or more to 30 nm or less is formed on at least a portion of surfaces of positive electrode active material secondary particles having an average secondary particle size of 3 um or more to 25 um or less, self-discharge during high-temperature storage can be suppressed, and, at the same time, deterioration of a positive electrode active material can be suppressed. From these results, it is possible to provide a nonaqueous electrolyte battery superior in high-temperature storage performance and large current performance. Thus, when the battery is used in a vehicle such as an automobile, it is not necessary to keep a temperature of the battery constant as much as possible by cooling the battery with air or water, and an increase in volume or weight of a battery pack and an increase in cost can be suppressed.

The positive electrode active material secondary particles are characterized by containing at least one selected from the group consisting of a lithium manganese composite oxide having a spinel structure represented by LiₓMn₂O₄ (0 ≤ x ≤ 1), a lithium nickel cobalt manganese composite oxide represented by LiₓNi_{1-e-f}CoₑMn_{f}O₂ (0 ≤ x ≤ 1.1, 0 < e < 1, 0 < f < 1), a lithium nickel aluminum composite oxide represented by LiₓNi_{1-z-q}Co_{z}Al_{q}O₂ (0 ≤ x ≤ 1, 0 ≤ z ≤ 1, 0 < q ≤ 0.2) , a lithium nickel manganese composite oxide having a spinel structure represented by LiₓNi_{d}Mn_{2-d}O₄ (0 ≤ x ≤ 1, 0.3 ≤ d ≤ 0.6), a lithium-phosphorus composite oxide having an olivine structure represented by LiₓCoPO₄ (0 < x ≤ 1), and a phosphate compound having an olivine structure represented by LiₓFe_{1-y-z}Mn_{y}M_{z}PO₄ (M is at least one element selected from the group consisting of Mg, Al, Ti, and Zr, 0 ≤ x ≤ 1.1, 0 ≤ y ≤ 1, 0 ≤ z ≤ 0.2). This is because the covering layer has a high effect of suppressing deterioration of the above positive electrode active materials.

Further, when positive electrode active material secondary particles containing Mn and/or Fe are used, the covering layer has a high effect of suppressing elution of Mn and Fe from the positive electrode active material under high temperature. Thus, since it is possible to suppress precipitation of Mn and Fe on the negative electrode, cycle life at high temperature can be improved.

As a lithium titanium oxide of the covering layer, when a lithium titanium oxide represented by a chemical formula: Li_{4+σ}Ti₅O₁₂ (-0.5 ≤ σ ≤ 0.5) is used, a diffusion rate of lithium ions of the covering layer is accelerated. In the lithium titanium oxide represented by the above chemical formula, a value of σ can be changed in a range of -0.5 ≤ σ ≤ 0.5 by an insertion/extraction reaction of lithium ions. Since the lithium titanium oxide in the covering layer does not substantially perform the insertion/extraction reaction of lithium ions at a potential where lithium ions is inserted in and extracted from the positive electrode active material, σ may be 0. Accordingly, although the covering layer has lithium ion conductivity, the electron conductivity is low.

When the negative electrode contains a titanium-containing metal oxide as an active material, a low-temperature performance of the nonaqueous electrolyte battery can be improved. When a carbonaceous material is used as a negative electrode active material, since metal lithium precipitates on the negative electrode under low temperature, a charge-and-discharge cycle life at low temperature may be reduced. When a titanium-containing metal oxide contains at least one selected from the group consisting of a lithium titanium composite oxide, an oxide of titanium, a niobium-titanium composite oxide, and a sodium-niobium-titanium-containing composite oxide, it is possible to achieve a nonaqueous electrolyte battery superior in high-temperature storage performance, large current performance, and low-temperature performance.

Hereinafter, the positive electrode, the negative electrode, and the nonaqueous electrolyte will be described.

### (1) Positive Electrode

The positive electrode includes a positive electrode current collector and a positive electrode active material-containing layer provided on one surface or both surfaces of the current collector. The positive electrode active material-containing layer includes a conductive agent and a binder, if necessary.

As the positive electrode active material, a lithium-containing transition metal oxide capable of having lithium or lithium ions to be inserted in and extracted from may be used. One or two or more kinds of positive electrode active materials may be used. The positive electrode active material includes at least one selected from the group consisting of a lithium manganese composite oxide having a spinel structure (LiₓMn₂O₄, 0 ≤ x ≤ 1), a lithium nickel cobalt manganese composite oxide (LiₓNi_{1-e-f}CoₑMn_{f}O₂ (0 ≤ x ≤ 1.1, 0 < e < 1, 0 < f < 1), a lithium nickel aluminum composite oxide (LiₓNi_{1-z-q}Co_{z}Al_{q}O₂ (0 ≤ x ≤ 1, 0 ≤ z ≤ 1, 0 < q ≤ 0.2), a lithium nickel manganese composite oxide having a spinel structure (LiₓNi_{d}Mn_{2-d}O₄ (0 ≤ x ≤ 1, 0.3 ≤ d ≤ 0.6)), and a lithium-phosphorus composite oxide having an olivine structure LiₓFe_{1-y}Mn_{y}PO₄ (0 < x ≤ 1, 0 ≤ y ≤ 1) or LiₓCoPO₄ (0 < x ≤ 1). The phosphate compound having an olivine crystal structure is excellent in thermal stability.

According to a lithium nickel aluminum composite oxide, a lithium nickel cobalt manganese composite oxide, and a lithium manganese cobalt composite oxide, a reaction with a nonaqueous electrolyte under high-temperature environment can be suppressed, and the battery life can be significantly increased. A lithium nickel cobalt manganese composite oxide represented by LiₓNi_{1-e-f}CoₑMn_{f}O₂ (0 ≤ x ≤ 1.1 (more preferably 0 < x ≤ 1.1, still more preferably 0 < x ≤ 1), 0 < e < 1 (more preferably 0 < e ≤ 0.5), 0 < f < 1 (more preferably 0 < f ≤ 0.5)) is advantageous for a high-temperature durability life.

As the positive electrode active material, a phosphate compound having an olivine structure represented by LiₓFe_{1-y-z}Mn_{y}M_{z}PO₄ (M is at least one element selected from the group consisting of Mg, Al, Ti, and Zr, 0 ≤ x ≤ 1.1, 0 ≤ y ≤ 1, 0 ≤ z ≤ 0.2) may be used. Such a positive electrode active material enhances thermal stability of a secondary battery to improve a cycle life performance under high temperature environment. In LiₓFe_{1-y-z}Mn_{y}M_{z}PO₄, y is preferably 0.5 or more to 1 or less and more preferably 0.7 or more to 0.9 or less. When y is in this range, a positive electrode voltage becomes high to improve energy density and increase electron conductivity, and thus to enhance the large current performance. Moreover, when z is preferably 0 or more to 0.1 or less and more preferably 0.01 or more to 0.08 or less, dissolution of Mn and Fe in a high-temperature cycle (for example, 45°C or more) is suppressed to significantly enhance a high-temperature cycle performance.

In order to achieve low resistance and improve the life performance, at least a portion of a particle surface of a lithium phosphorus compound having an olivine structure and/or a surface of the covering layer is preferably covered with a carbon material layer. The carbon material layer may be layered or contain fibers or particles of a carbon material. The carbon material layer may be formed on a portion or the entirety of the surface of at least one of the positive electrode active material particles, other than a lithium phosphorus compound having an olivine structure, and the covering layer on the positive electrode active material particles.

The positive electrode active material is in the form of secondary particles obtained by coagulating primary particles of the positive electrode active material. As the positive electrode active material, independent primary particles may be included.

An average particle size of the positive electrode active material secondary particles is in a range of 3 um or more to 25 um or less. When the average particle size is less than 3 µm, the remaining capacity during high-temperature storage is lowered even if the covering layer is provided. On the other hand, when the average particle size is more than 25 µm, a discharge rate performance is deteriorated. A preferable lower limit is 5 um, and a preferable upper limit is 20 um.

The average particle size of positive electrode active material primary particles is preferably in a range of 0.05 um or more to 2 pm or less. When the average particle size is in this range, the high-temperature storage performance or the large current performance can be further enhanced. A preferable lower limit is 0.1 um, and a preferable upper limit is 1 um.

The covering layer covers at least a portion of a surface of the positive electrode active material secondary particles. The covering layer may cover at least a portion of a surface of the primary particles inside the positive electrode active material secondary particles.

A lithium titanium oxide in the covering layer is preferably represented by a chemical formula: Li_{4+σ}Ti₅O₁₂ (-0.5 ≤ σ ≤ 0.5). When the lithium titanium oxide has this chemical composition, the diffusion rate of lithium ions is high, and thus it is preferable. The covering layer may contain a carbon material.

The covering layer preferably has a thickness of 3 nm or more to 30 nm or less. When the thickness of the covering layer is in this range, a self-discharge reaction at the positive electrode, an oxidation reaction of the nonaqueous electrolyte under high-temperature environment, and an internal short-circuit can be suppressed, and, at the same time, electrode reaction resistance can be reduced. Therefore, the discharge rate performance can be enhanced. Accordingly, even if the shortest distance between the positive electrode and the negative electrode is from 3 µm to 12 µm, the self-discharge reaction and the internal short-circuit are suppressed, and the high-temperature storage performance can be maintained high. A preferable lower limit is 5 nm, and a preferable upper limit is 15 nm. The covering layer may have a laminated structure or a particulate structure or may be in the form of an aggregate of particles.

Examples of a conductive agent include carbon materials such as graphite, carbon black, acetylene black, and carbon fibers. One or two or more kinds of conductive agents may be used. Carbon fibers preferably have a fiber diameter of 1 um or less. When carbon fibers having a fiber diameter of 1 pm or less are included, such a problem that electron conduction resistance of the positive electrode is high can be improved by a network of carbon fibers having a small fiber diameter, and positive electrode resistance can be effectively reduced. By virtue of the use of carbon fibers having a fiber diameter of 1 pm or less and produced by vapor phase growth, a network of electron conduction in the positive electrode is enhanced, so that an output performance of the positive electrode can be enhanced.

The positive electrode current collector includes an aluminum foil or an aluminum alloy foil. The positive electrode current collector may have aluminum purity in a range of 99% by weight or more to 100% by weight or less. The positive electrode current collector may be pure aluminum having a purity of 100% by weight. The aluminum purity is more preferably in a range of 99% by weight or more to 99.99% by weight or less. When the aluminum purity is in this range, deterioration of a high-temperature cycle life due to dissolution of an impurity element can be reduced. The aluminum alloy is preferably an alloy containing an aluminum component and one or more elements selected from the group consisting of iron, magnesium, zinc, manganese, and silicon. For example, an Al-Fe alloy, an Al-Mn-based alloy, and an Al-Mg-based alloy can obtain higher strength than that of aluminum. On the other hand, a content of transition metal such as nickel or chromium in an aluminum alloy or an aluminum is preferably 100 weight ppm or less (including 0 weight ppm) . Although an Al-Cu-based alloy has high strength, the corrosion resistance is not satisfactory.

The thickness of the positive electrode current collector is preferably 20 um or less and more preferably 15 pm or less.

Examples of a binder for binding an active material and a conductive agent include polytetrafluoroethylene (PTFE), polyvinylidene fluoride (PVdF), and fluorine rubbers. One or two or more kinds of binders may be used.

The mixing ratio of the positive electrode active material, the conductive agent, and the binder is preferably 80% by weight or more to 95% by weight or less of the positive electrode active material, 3% by weight or more to 19% by weight or less of the conductive agent, and 1% by weight or more to 7% by weight or less of the binder.

The positive electrode is produced by, for example, suspending the positive electrode active material, the conductive agent, and the binder in an appropriate solvent, applying this suspension on the positive electrode current collector, and drying and pressing. The specific surface area of the positive electrode active material-containing layer according to the BET method is measured in the same manner as in the case of the negative electrode and is preferably in a range of 0.1 m²/g to 2 m²/g.

### (2) Negative Electrode

The negative electrode includes a negative electrode current collector and a negative electrode active material-containing layer provided on one surface or both surfaces of the negative electrode current collector. The negative electrode active material-containing layer includes a conductive agent and a binder, if necessary.

As the negative electrode active material, an active material capable of allowing lithium or lithium ions inserted in and extracted from may be used. Examples of the negative electrode active material include lithium metal, alloys containing at least one selected from the group consisting of Si, Al, Sn and Zn, and capable of being alloyed with lithium, oxides (such as SiO, SnO or ZnO), carbon materials such as graphite, coke, or hard carbon, titanium-containing metal oxides, and metal sulfide. One or two or more kinds of negative electrode active materials may be used. In particular, the negative electrode active material is preferably a titanium-containing metal oxide.

Examples of titanium-containing oxides include a lithium titanium composite oxide, an oxide of titanium, a niobium-titanium composite oxide, and a sodium-niobium-titanium-containing composite oxide.

Examples of lithium titanium composite oxides include a lithium titanium composite oxide having a spinel structure (for example, a general formula: Li_{4/3+x}Ti_{5/3}O₄ (x is 0 ≤ x ≤ 1.1)), a lithium titanium composite oxide having a ramsdellite structure (for example, Li₂₊ₓTi₃O₇ (-1 ≤ x ≤ 3)), Li₁₊ₓTi₂O₄ (0 ≤ x ≤ 1), Li_{1.1+x}Ti_{1.8}O₄ (0 ≤ x ≤ 1), Li_{1.07+x}Ti_{1.86}O₄ (0 ≤ x ≤ 1), and a lithium titanium composite oxide represented by Li₂₊ₐA_{d}Ti_{6-b}B_{b}O_{14±c} (A is one or more elements selected from Na, K, Mg, Ca, and Sr, B is a metal element other than Ti, 0 ≤ a ≤ 5, 0 ≤ b < 6, 0 ≤ c ≤ 0.6, 0 ≤ d ≤ 3).

Examples of oxides of titanium include an oxide of titanium having a monoclinic structure (for example, the structure before charging is TiO₂(B) or LiₓTiO₂ (x is 0 ≤ x)), an oxide of titanium having a rutile structure (for example, the structure before charging is TiO₂ or LiₓTiO₂ (x is 0 ≤ x)), and an oxide of titanium having an anatase structure (for example, the structure before charging is TiO₂ or LiₓTiO₂ (x is 0 ≤ x)).

Examples of niobium-titanium composite oxides include a niobium-titanium composite oxide represented by LiₐTiM_{b}Nb_{2±β}O_{7±σ} (0 ≤ a ≤ 5, 0 ≤ b ≤ 0.3, 0 ≤ β ≤ 0.3, 0 ≤ σ ≤ 0.3, and M is at least one element selected from the group consisting of Fe, V, Mo, and Ta) .

Examples of sodium-niobium-titanium-containing composite oxides include an orthorhombic type Na-containing niobium titanium composite oxide represented by a general formula: Li₂₊ᵥNa_{2-w}M1ₓTi_{6-y-z}Nb_{y}M2_{z}O_{14+δ} (0 ≤ v ≤ 4, 0 < w < 2, 0 ≤ x < 2, 0 < y ≤ 6, 0 ≤ z < 3, -0.5 ≤ 6 ≤ 0.5, M1 contains at least one selected from Cs, K, Sr, Ba, and Ca, and M2 contains at least one selected from Zr, Sn, V, Ta, Mo, W, Fe, Co, Mn, and Al).

Particles of the negative electrode active material may include independent primary particles, secondary particles resulting from agglomeration of primary particles, or both the independent primary particles and the secondary particles.

An average primary particle size is preferably 2 um or less. In order to enhance the discharge rate performance, the average primary particle size is preferably 1 um or less. The lower limit is preferably 0.001 um.

By virtue of the use of negative electrode active material particles having an average secondary particle size (average secondary particle diameter) of not less than 5 um and comprising one or more kinds of titanium-containing oxides selected from a lithium titanium composite oxide, an oxide of titanium, and a niobium titanium composite oxide, a packing density of the negative electrode can be increased at a pressing pressure lower than that in the positive electrode. Thus, it is possible to reduce crushing of the negative electrode active material secondary particles, and, at the same time, it is possible to suppress a reduction in electronic resistance between negative electrode active material particles and an increase in resistance due to reduction and decomposition of a nonaqueous electrolyte. A more preferable average particle size (average diameter) of secondary particles is in a range of 7 um to 20 um.

Examples of the conductive agent of the negative electrode include graphite, carbon fibers having a fiber diameter of 1 um or less, acetylene black, coke, and Li₄Ti₅O₁₂. One or two or more kinds of conductive agents may be used. By virtue of the addition of carbon fibers having a fiber diameter of 1 um or less and/or Li₄Ti₅O₁₂, electrode resistance is reduced, and the cycle life performance is enhanced. When at least a portion of a particle surface of a titanium-containing oxide containing a niobium titanium composite oxide and/or Li₂₊ₐA_{d}Ti_{6-b}B_{b}O_{14±c} is covered with a coating containing a carbon material and/or lithium titanium oxide, a network of electron conduction in the negative electrode is improved, and it is possible to reduce negative electrode resistance and reduce reduction reaction of a nonaqueous electrolyte; therefore, it is preferable.

In the negative electrode active material particles, the specific surface area according to the BET method with N₂ adsorption is preferably in a range of 3 m²/g to 200 m²/g. Consequently, the affinity with the nonaqueous electrolyte of the negative electrode can be further increased.

The specific surface area of the negative electrode can be made within a range of 3 m²/g or more to 50 m²/g or less. A more preferable range of the specific surface area is 5 m²/g to 50 m²/g. Here, the specific surface area of the negative electrode means a surface area per 1 g of a negative electrode active material-containing layer (except for a weight of a current collector). The negative electrode active material-containing layer is a porous layer supported on a current collector and including a negative electrode active material, a conductive agent, and a binder.

The porosity of the negative electrode (except for the current collector) is preferably in a range of 20% to 50% and more preferably in a range of 25% to 40%.

The negative electrode current collector comprises preferably an aluminum foil or an aluminum alloy foil. The thickness of the aluminum foil or the aluminum alloy foil is preferably 20 um or less and more preferably 15 um or less. The purity of the aluminum foil may be in a range of 98% by weight or more. The purity of the aluminum foil may be preferably 99.99% by weight or more. The aluminum foil may be pure aluminum which has a purity of 100 % by weight. The aluminum alloy is preferably an aluminum alloy containing at least one element selected from the group consisting of iron, magnesium, manganese, zinc, and silicon. On the other hand, a content of transition metal such as nickel or chromium is preferably 100 weight ppm or less (including 0 weight ppm). For example, an Al-Fe alloy, an Al-Mn-based alloy, and an Al-Mg-based alloy can obtain higher strength than that of aluminum. On the other hand, in an Al-Cu-based alloy, although strength is increased, excellent corrosion resistance cannot be obtained.

The current collector may have aluminum purity in a range of 98% by weight or more to 99.95% by weight or less. When secondary particles of a titanium-containing oxide are combined with the negative electrode current collector having such aluminum purity, since a negative electrode pressing pressure can be reduced to reduce extension of the current collector, this purity range is suitable. Consequently, there is advantage that the electron conductivity of the current collector can be increased, and, in addition, crushing of the secondary particles of a titanium-containing oxide is reduced, so that a low resistance negative electrode can be produced.

Examples of a binder include polytetrafluoroethylene (PTFE), polyvinylidene fluoride (PVdF), fluorine rubbers, acrylic rubbers, styrene butadiene rubber, core-shell binders, and polyimide. One or two or more kinds of binders may be used.

The mixing ratio of the negative electrode active material, the conductive agent, and the binder is preferably 80% by weight to 95% by weight of the negative electrode active material, 1% by weight to 18% by weight of the conductive agent, and 2% by weight to 7% by weight of the binder.

The negative electrode is produced by, for example, suspending the negative electrode active material, the conductive agent, and the binder in an appropriate solvent, applying this suspension on the current collector, and drying and pressing (for example, heat press).

### (3) Nonaqueous Electrolyte

The nonaqueous electrolyte is a liquid, or gel electrolyte having lithium ion conductivity.

Examples of the nonaqueous electrolyte include a liquid organic electrolyte prepared by dissolving a lithium salt in an organic solvent, and a gel organic electrolyte obtained by compounding a liquid organic solvent and a polymer material. The nonaqueous electrolyte preferably contains at least one selected from the group consisting of an ionic liquid, a polymer solid electrolyte, an inorganic solid electrolyte, and an organic electrolyte solution containing a lithium salt. Examples of polymer materials include polyvinylidene fluoride (PVdF), polyacrylonitrile (PAN), and polyethylene oxide (PEO) .

Since the shortest distance between the positive electrode and the negative electrode is from 3 µm to 12 µm, a separator and/or an electrolyte layer can be disposed between the positive electrode and the negative electrode. The nonaqueous electrolyte is held or impregnated in the separator. Consequently, battery resistance is reduced, and the discharge rate performance is enhanced. To make the shortest distance between the positive electrode and the negative electrode 5 um or less, it is preferable to use (a) a solid electrolyte layer including a lithium ion conductive inorganic solid electrolyte or (b) an electrolyte layer obtained by compounding an alumina powder and/or silica powder having no lithium ion conductivity with a liquid or gel nonaqueous electrolyte.

The electrolyte layer contains lithium-containing oxide particles. The lithium-containing oxide particles include an oxide solid electrolyte having lithium ion conductivity selected from oxide solid electrolytes having a garnet structure and lithium phosphorus solid electrolytes having a NASICON structure as described below. An oxide solid electrolyte having high lithium ion conductivity promotes movement of lithium ions at an interface between the electrolyte and an electrode. One or two or more kinds of lithium-containing oxide particles may be used.

Example of oxide solid electrolytes having lithium ion conductivity include an oxide solid electrolyte having a garnet structure. The oxide solid electrolyte having a garnet structure has advantages that reduction resistance is high, and an electrochemical window is wide. Examples of the oxide solid electrolyte having a garnet structure include Li₅₊ₓAₓLa₃₋ₓM₂O₁₂ (A is at least one element selected from the group consisting of Ca, Sr, and Ba, M is Nb and/or Ta, and x is preferably in a range of 0.5 or less (including 0)), Li₃M₂₋ₓL₂O₁₂ (M is Nb and/or Ta, L contains Zr, and x is preferably in a range of 0.5 or less (including 0)), Li₇₋₃ₓAlₓLa₃Zr₃O₁₂ (x is preferably in a range of 0.5 or less (including 0)), and Li₇La₃Zr₂O₁₂. In particular, since Li_{6.25}Al_{0.25}La₃Zr₃O₁₂, Li_{6.4}La₃Zr_{1.4}Ta_{0.6}O₁₂, Li_{6.4}La₃Zr_{1.6}Ta_{0.6}O₁₂, and Li₇La₃Zr₂O₁₂ have high ion conductivity and are electrochemically stable, they are superior in discharge performance and cycle life performance. Fine particles having a specific surface area of 10 m²/g to 500 m²/g (preferably 50 m²/g to 500 m²/g) have advantages that it is electrochemically stable with respect to an organic solvent.

Lithium-containing oxide particles may include independent primary particles, secondary particles resulting from agglomeration of primary particles, or both the independent primary particles and the secondary particles.

An average size (average diameter) of lithium-containing oxide particles is preferably in a range of 0.01 pm or more to 0.5 um or less. If the average size is in this range, since the ion conductivity in a composite electrolyte is enhanced, the discharge performance and the low-temperature performance are enhanced. A more preferable range is 0.05 um or more to 0.3 um or less.

Lithium-containing oxide particles whose specific surface area measured by the BET adsorption method using N₂ is 10 m²/g to 500 m²/g are obtained by making the average particle size (average particle diameter) fine so as to be 0.1 um or less.

Examples of oxide solid electrolytes having lithium ion conductivity include a lithium phosphorus solid electrolyte having a NASICON structure. Examples of the lithium phosphorus solid electrolyte having a NASICON structure include LiM1₂(PO₄)₃, where M1 is one or more elements selected from the group consisting of Ti, Ge, Sr, Zr, Sn, and Al. In each of Li₁₊ₓAlₓGe₂₋ₓ(PO₄)₃, Li₁₊ₓAlₓZr₂₋ₓ(PO₄)₃, and Li₁₊ₓAlₓTi₂₋ₓ(PO₄)₃, x is preferably in a range of 0 or more to 0.5 or less. These examples are preferable since the ion conductivity and the electrochemical stability are high. Both the lithium phosphorus solid electrolyte having a NASICON structure and the oxide solid electrolyte having a garnet structure may be used as a solid electrolyte having lithium ion conductivity.

A liquid nonaqueous electrolyte is obtained by, for example, dissolving a lithium salt in an organic solvent. Examples of lithium salts include LiPF₆, LiClO₄, LiBF₄, LiCF₃SO₃, LiN(FSO₂)₂, LiN(CF₃SO₂)₂, LiAsF₆, LiN(C₂F₅SO₂)₂, Li(CF₃SO₂)₃C, and LiB[(OCO)₂]₂. One or two or more kinds of electrolytes may be used. When at least one of LiPF₆, LiBF₄, and LiN(FSO₂)₂ is used, the ion conductivity is increased to enhance the discharge performance. In a nonaqueous electrolyte containing lithium tetrafluoroborate (LiBF₄), chemical stability of an organic solvent is high, film resistance on the negative electrode can be reduced, and the low-temperature performance and the cycle life performance can be significantly enhanced.

Examples of organic solvent include cyclic carbonates such as propylene carbonate (PC) or ethylene carbonate (EC), chain carbonates such as diethyl carbonate (DEC), dimethyl carbonate (DMC), or methylethyl carbonate (MEC), chain ethers such as dimethoxyethane (DME) or diethoxyethane (DEE), cyclic ethers such as tetrahydrofuran (THF) or dioxolan (DOX), γ-butyrolactone (GBL), acetonitrile (AN), and sulfolane (SL) . These organic solvents may be used either singly or as a mixed solvent of two or more thereof. When one or two or more kinds of propylene carbonate (PC), ethylene carbonate (EC), and γ-butyrolactone (GBL) are used as primary components, the boiling point is 200°C or more, and the thermal stability is enhanced. A nonaqueous electrolyte containing γ-butyrolactone (GBL) allows a highly concentrated lithium salt to be dissolved in a solvent, so that the output performance under low-temperature environment is enhanced.

In a liquid nonaqueous electrolyte, an electrolyte concentration in an organic solvent can be made within a range of 0.5 mol/L or more to 2.5 mol/L or less. A more preferable range is 1.5 mol/L or more to 2.5 mol/L.

Also, a room temperature molten salt (ionic melt or ionic liquid) containing lithium ions may be used as the nonaqueous electrolyte. The room temperature molten salt (ionic melt or ionic liquid) preferably contains lithium ion, organic material cation, and organic material anion. Further, the room temperature molten salt is preferably a liquid at room temperature or less.

Hereinafter, an electrolyte containing a room temperature molten salt will be described.

The room temperature molten salt means a salt of which at least a portion is a liquid at a room temperature, and the room temperature means a temperature range within which a power source is ordinarily expected to operate. An upper limit of the temperature range within which a power source is ordinarily expected to operate is approximately 120°C or 60°C in some cases, and a lower limit thereof is about -40°C or -20°C in some cases. Among the above, the range of -20°C or more to 60°C or less is suitable.

As the room temperature molten salt containing lithium ion, an ionic melt containing the lithium ion, an organic material cation, and an anion is preferably used. The ionic melt is preferably in the form of a liquid at room temperature or less.

Examples of the organic material cation include an alkylimidazolium ion and a quaternary ammonium ion which have the skeleton shown by the following formula 1.

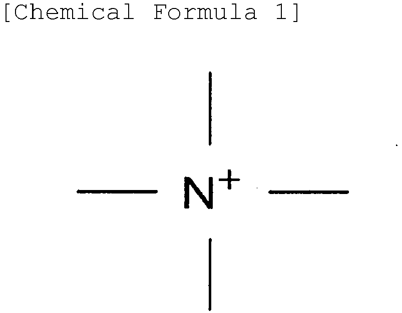

As alkylimidazolium ion, a dialkylimidazolium ion, a trialkylimidazolium ion, a tetraalkylimidazolium ion and the like are preferable. As dialkylimidazolium ion, 1-methyl-3-ethylimidazolium ion (MEI⁺) is preferable. As trialkylimidazolium ion, 1,2-diethyl-3-propylimidazolium ion (DMPI⁺) is preferable. As tetraalkylimidazolium ion, 1,2-diethyl-3,4(5)-dimethylimidazolium ion is preferable.

As quaternary ammonium ion, a tetraalkylammonium ion, a cyclic ammonium ion, and the like are preferable. As tetraalkylammonium ion, dimethylethylmethoxyethylammonium ion, dimethylethylmethoxymethylammonium ion, dimethylethylethoxyethylammonium ion, and trimethylpropylammonium ion are preferable.

When the above alkylimidazolium ion or quaternary ammonium ion (especially, a tetraalkylammonium ion) is used, the melting point is preferably 100°C or less and more preferably 20°C or less. Also, the reactivity with the negative electrode can be reduced.

The concentration of the lithium ion is preferably 20 mol% or less. A more preferable range is 1 mol% to 10 mol%. When the concentration is made within the above range, a liquid room temperature molten salt can be easily formed at a temperature as low as 20°C or less. Also, the viscosity can be lowered at a normal temperature or less, and the ion conductivity can be heightened.

As the anion, one or more anions selected from, for example, BF₄⁻, PF₆⁻, AsF₆⁻, ClO₄⁻, CF₃SO₃⁻, CF₃COO⁻, CH₃COO⁻, CO₃²⁻, (FSO₂)₂N⁻, N(CF₃SO₂)²⁻, N(C₂F₅SO₂)²⁻, and (CF₃SO₂)₃C⁻ preferably coexist. The coexistence with plural anions makes it possible to easily form a room temperature molten salt having a melting point of 20°C or less. More preferable examples of the anion include BF₄⁻, N(CF₃SO₂)²⁻, CF₃SO₃⁻, CF₃COO⁻, CH₃COO⁻, CO₃²⁻, N(C₂F₅SO₂)²⁻, and (CF₃SO₂)₃C⁻. A room temperature molten salt having a melting point of 0°C or less is more easily formed by these anions.

### (4) Separator

A separator can be disposed between the positive electrode and the negative electrode.

Examples of the separator include nonwoven fabric, films, paper, and porous films. Examples of the materials of the separator include cellulose and polyolefin such as polyethylene or polypropylene. One or two or more kinds of the materials may be used.

The separator preferably has a thickness of 12 um or less.

The porosity of the separator is preferably 50% or more, more preferably 60% or more, and still more preferably 62% or more. The lower limit may be 80%.

A nonwoven fabric or porous film having a thickness of 12 um or less and a porosity of 50% or more and containing cellulose and/or polyolefin is preferable. In particular, it is preferable that the porosity is 60% or more, and cellulose fibers are used. Examples of the separator also include a nonwoven fabric, film, or paper containing cellulose fibers having a fiber diameter of 10 um or less. A separator having a porosity of 60% or more and containing cellulose fibers has a good impregnating ability of a nonaqueous electrolyte and can exhibit a high output performance from low temperature to high temperature. A more preferable range of the porosity is 62% to 80%. When the separator is combined with a negative electrode containing a titanium-containing metal oxide as an active material, even in the range of the porosity of 60% or more, the separator does not react with the negative electrode during long term charge storage, float charging, or over-charge, and short-circuit between the negative electrode and the positive electrode due to dendrite precipitation of lithium metal does not occur. When the cellulose fiber diameter is 3 um or less, the affinity with the nonaqueous electrolyte is increased, so that battery resistance can be reduced. A more preferable range is 1 um or less.

The separator preferably has a thickness of 3 pm or more to 12 um or less and a density of 0.2 g/cm³ or more to 0.9 g/cm³ or less. If the thickness and the density are in these respective ranges, it is possible to provide a battery which has high output with reduction in battery resistance and is less likely to cause an internal short-circuit. Also, a reduction in thermal shrinkage under high-temperature environment and high-temperature storage performance can be attained. A product obtained by applying a slurry, containing an inorganic solid powder, onto the positive electrode or the negative electrode may be used instead of the separator. Examples of an inorganic solid powder include alumina, silica, and oxide solid electrolytes having lithium ion conductivity. When an inorganic solid powder is used as a separator, since mechanical strength can be increased, a distance between the positive electrode and the negative electrode can be reduced. It is further preferable that a separator, such as nonwoven fabric, a film, paper, or a porous film, is compounded with an inorganic solid powder. Examples of oxide solid electrolytes having lithium ion conductivity are as described in " (3) Nonaqueous Electrolyte".

### (5) Container

The nonaqueous electrolyte battery may comprise a container storing a positive electrode, a negative electrode, and a nonaqueous electrolyte. As the container storing the positive electrode, the negative electrode, and the nonaqueous electrolyte, a metal container or a laminate film container may be used.

As the metal container, a rectangular or cylindrical metal can made of aluminum, aluminum alloy, iron, stainless steel, or the like may be used. A plate thickness of the container is preferably 0.5 mm or less and more preferably 0.3 mm or less.

Examples of laminate films include a multilayer film in which an aluminum foil is covered with a resin film. As the resin, a polymer such as polypropylene (PP), polyethylene (PE), nylon, or polyethylene terephthalate (PET) may be used. A thickness of a laminated film is more preferably not more than 0.2 mm. The purity of the aluminum foil is preferably 99.5% or more.

A metal can made of aluminum alloy is preferably formed of an alloy containing elements such as manganese, magnesium, zinc, or silicon and having aluminum purity of 99.8% or less. When the strength of the metal can made of aluminum alloy dramatically increases, the wall thickness of the can be reduced. As a result, it is possible to achieve a thin and lightweight battery which has high output and is superior in heat radiation.

The nonaqueous electrolyte batteries according to the approaches can be applied in various types of nonaqueous electrolyte batteries, such as rectangular type, cylindrical type, flat type, thin type, or coin type. The nonaqueous electrolyte batteries according to the approaches may have a bipolar structure. According to this constitution, there is an advantage that a cell having a voltage equivalent to that of a battery module in which plural unit cells are connected in series can be achieved by a single cell having a bipolar structure.

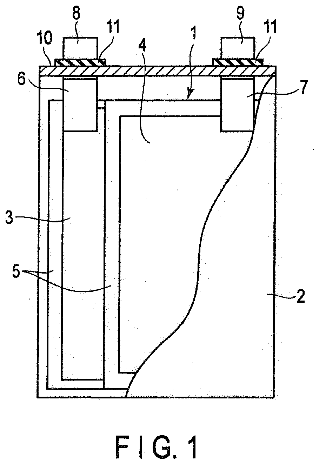

The nonaqueous electrolyte batteries of the approaches will be described with reference to FIGS. 1 to 5.

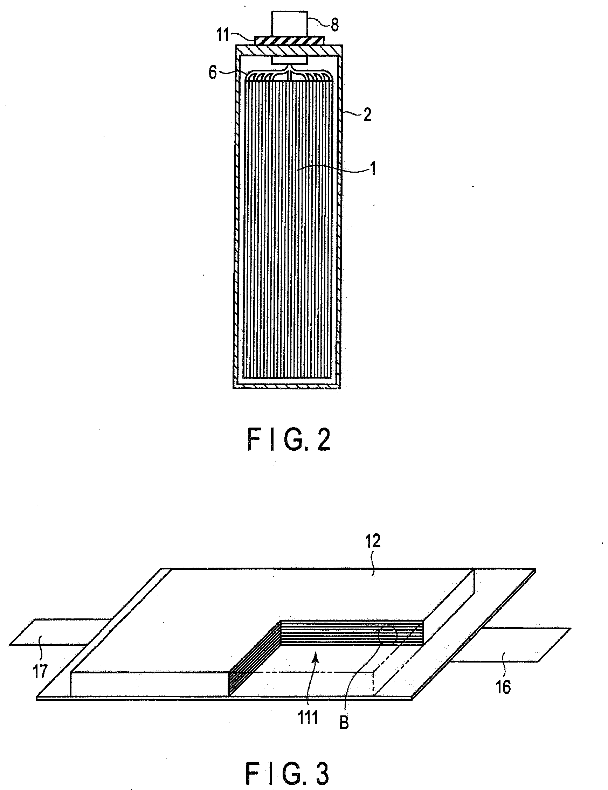

FIGS. 1 and 2 each show an example of a nonaqueous electrolyte secondary battery using a metal container. An electrode group 1 is stored in a rectangular cylindrical metal container 2. The electrode group 1 has a structure in which a positive electrode 3 and a negative electrode 4 are spirally wound to provide a flat shape while an electrolyte layer or a separator 5 is interposed between the positive electrode 3 and the negative electrode 4. As shown in FIG. 2, belt-like positive electrode leads 6 are electrically connected to plural portions of an end portion of the positive electrode 3 located on an end surface of the electrode group 1. On the other hand, belt-like negative electrode leads 7 are electrically connected to plural portions of an end portion of the negative electrode 4 located on this end surface of the electrode group 1. The positive electrode leads 6 are bundled to be electrically connected to a positive electrode conductive tab 8. A positive electrode terminal is constituted of the positive electrode leads 6 and the positive electrode conductive tab 8. The negative electrode leads 7 are bundled to be electrically connected to a negative electrode conductive tab 9. A negative electrode terminal is constituted of the negative electrode leads 7 and the negative electrode conductive tab 9. A metal sealing plate 10 is fixed to an opening of the metal container 2 by welding or the like. The positive electrode conductive tab 8 and the negative electrode conductive tab 9 are drawn to the outside through a take-out hole formed in the sealing plate 10. An inner peripheral surface of each take-out hole of the sealing plate 10 is covered with an insulating member 11 in order to avoid a short-circuit due to contact between the positive electrode conductive tab 8 and the sealing plate 10, and between the negative electrode conductive tab 9 and the sealing plate 10.

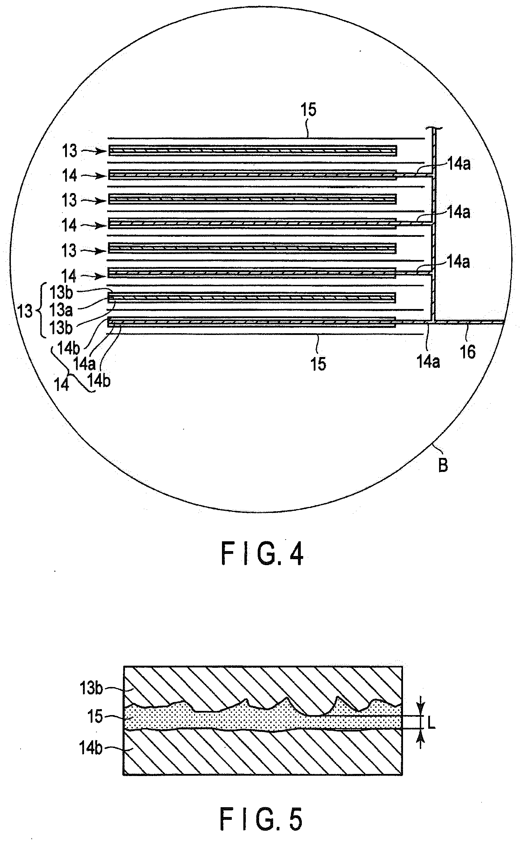

FIGS. 3 and 4 show an example of a nonaqueous electrolyte battery including a container member made of a laminate film. FIG. 3 is a partially cut-out perspective view schematically showing another flat type nonaqueous electrolyte battery according to the approach. FIG. 4 is an enlarged cross-sectional view of a B part of FIG. 3.

A laminate type electrode group 111 is stored in a container member 12 made from a laminate film in which a metal layer is interposed between two resin films. The laminate type electrode group 111 has a structure in which a positive electrode 13 and a negative electrode 14 are alternately stacked with a separator or an electrolyte layer 15 being interposed therebetween as shown in FIG. 4. There are a plurality of the positive electrodes 13, and each of which includes a current collector 13a and a positive electrode active material-containing layer 13b which is arranged on both surfaces of the current collector 13a. There are a plurality of the negative electrodes 14, and each of which includes a negative electrode current collector 14a and a negative electrode active material-containing layer 14b which is arranged on both surfaces of the negative electrode current collector 14a. One side of the negative electrode current collector 14a of each of the negative electrodes 14 is projected from the negative electrode 14. The projected negative electrode current collector 14a is electrically connected to a belt-like negative electrode terminal 16. A leading end of the belt-like negative electrode terminal 16 is drawn to the outside from the container member 12. Further, although not shown, a side of the positive electrode current collector 13a is projected from the positive electrode 13 and positioned at an opposite side of the projected side of the negative electrode current collector 14a. The positive electrode current collector 13a projected from the positive electrode 13 is electrically connected to a belt-like positive electrode terminal 17. A leading end of the belt-like positive electrode terminal 17 is positioned at an opposite side of the negative electrode terminal 16 and is drawn to the outside from a side of the container member 12.

Hereinafter, a method of measuring a distance between a positive electrode and a negative electrode, an average particle size of active material particles of the positive electrode and the negative electrode, and a thickness of a covering layer will be described.

A nonaqueous electrolyte battery is exploded in a glove box filled with argon to take out an electrode group therefrom. After the electrode group is cleaned, a nonaqueous electrolyte in the electrode group may be removed by vacuum drying. Subsequently, in the glove box, a thickness of the electrode group is measured in such a state that a constant load (for example, 10 g/cm²) is applied to the electrode group with the use of a flat plate. While the flat plate is disposed in the electrode group, the electrode group is cut in parallel with positions corresponding to 10%, 50%, and 90% of the thickness of the electrode group from a surface of the electrode group in contact with the flat plate. As a result, the electrode group is divided into three portions in a direction vertical to the electrode group thickness to obtain electrode group samples. The electrode group is cut in a cross shape passing through a center in an in-plane direction of each of the three electrode group samples. Regarding each of the three electrode group samples, a portion of a cross section cut along one direction of the cross shape and a portion of a cross section cut along the other direction of the cross shape are observed by a scanning electron microscope (SEM). Accordingly, the total number of portions to be observed is six. Observation magnification by SEM is 100 to 1000 times. The shortest distance between the positive electrode and the negative electrode is measured in each of six visual fields. The minimum value of the obtained measured values is taken to be the shortest distance between the positive electrode and the negative electrode. FIG. 5 is a schematic diagram of a boundary portion between a positive electrode or a negative electrode and an electrolyte layer. Since the positive electrode active material-containing layer 13b contains positive electrode active material secondary particles having an average secondary particle size of 3 pm or more to 25 um or less, the surface roughness is greater than that of the negative electrode active material-containing layer 14b. The electrolyte layer 15 such as a solid electrolyte layer is disposed between the positive electrode active material-containing layer 13b and the negative electrode active material-containing layer 14b. The shortest distance L of distances between a surface of the positive electrode active material-containing layer 13b and a surface of the negative electrode active material-containing layer 14b is the shortest distance between the positive electrode and the negative electrode.

The method of measuring the thickness of the covering layer will be described. When the shortest distance between the positive electrode and the negative electrode is determined, as described above, the shortest distance between the positive electrode and the negative electrode is obtained in each of six visual fields. The thickness of the covering layer on a surface of positive electrode active material particles located at the shortest distance is measured by transmission electron microscope (TEM) observation. An average of measured values obtained at six portions is taken to be the thickness of the covering layer to be obtained.

A method of measuring an average particle size of active material particles of the positive electrode or the negative electrode will be described.

After a nonaqueous electrolyte battery is discharged, the nonaqueous electrolyte battery is exploded in a glove box filled with argon to take out an electrode group therefrom and thus to take out the positive electrode and the negative electrode from the electrode group. The active material powder is taken out from each of the positive electrode and the negative electrode. The active material powder of each electrode is washed with an organic solvent (such as a diethyl carbonate solvent) to dissolve and remove a lithium salt. Then, after drying, washing is satisfactorily performed with water in air to remove remaining lithium ions, and thus to obtain an active material to be measured.

In the positive electrode active material, the existence of secondary particles is confirmed from SEM observation of a powder, and then a value of D50 is measured from a general particle size distribution measurement apparatus to be taken to be an average secondary particle size.

The average particle size of the active material particles is measured by the following method. About 0.1 g of a sample, a surfactant, and 1 mL to 2 mL of a distilled water are put in a beaker, and the distilled water is sufficiently stirred, followed by pouring the stirred system in a stirring water vessel. Under this condition, the light intensity distribution is measured every 2 seconds and measured 64 times in total according to a laser diffraction distribution measurement apparatus (SALD-300 manufactured by Shimadzu Corporation), to analyze the particle size distribution data. The value of D50 is taken to be the average secondary particle size or the average primary particle size.

According to the first approach described above, in a nonaqueous electrolyte battery in which the shortest distance between the positive electrode and the negative electrode is from 3 pm to 12 um, the average secondary particle size of the positive electrode active material secondary particles is 3 pm or more to 25 um or less. Moreover, at least a portion of the surfaces of the positive electrode active material secondary particles is covered with a covering layer containing a lithium titanium oxide and having a thickness of 3 nm or more to 30 nm or less. As a result, it is possible to provide a nonaqueous electrolyte battery superior in high-temperature storage performance and large current performance.

### (Second Approach)

The second approach provides a battery module and a battery pack including a nonaqueous electrolyte battery. As the nonaqueous electrolyte battery, the nonaqueous electrolyte battery according to the first approach is used, for example.

As a configuration in which plural nonaqueous electrolyte batteries are electrically connected in series, plural nonaqueous electrolyte batteries can be connected in series by connecting a positive electrode terminal and a negative electrode terminal by a metal busbar (for example, aluminum, nickel, or copper busbar) . When there is provided an internal structure in which electrode groups are electrically connected in series and electrochemically insulated by partition walls, plural electrode groups can be stored in a battery container case. As a configuration in which plural nonaqueous electrolyte batteries are electrically connected in series, it is preferable to implement the configuration in a nonaqueous electrolyte battery characterized by comprising a bipolar electrode structure in which a positive electrode active material-containing layer is disposed on one surface of an aluminum-containing current collector foil, and a negative electrode active material-containing layer is disposed on one surface of the opposite surface. Consequently, a capacity per volume of the nonaqueous electrolyte battery is higher than that in the configuration in which nonaqueous electrolyte batteries are connected in series, and thus it is preferable.

When plural nonaqueous electrolyte batteries are connected in series, a configuration in which five to six nonaqueous electrolyte batteries are connected in series is preferable. The nonaqueous electrolyte batteries having this configuration have a voltage compatibility with a lead battery. When a battery pack comprising a battery module constituted of five to six nonaqueous electrolyte batteries connected in series and a protective circuit subjected to current interruption in a range in which at least charging maximum voltage is 16 V or less is provided, a voltage region of a lead battery can be stably covered, and thus it is preferable. On the other hand, a discharging minimum voltage of the battery module is preferably 5 V or more. If this range is departed from, the cycle life performance of the battery is significantly deteriorated.

A battery module configured such that a plurality of the nonaqueous electrolyte batteries according to the first approach are electrically connected in series and a battery pack including this battery module can suppress over-charge and over-discharge of each battery accompanying capacity variation of each battery during charge-and-discharge cycle and can enhance the cycle life performance.

Subsequently, a nonaqueous electrolyte battery having a bipolar structure will be described. The battery includes a current collector having a first surface and a second surface located opposite to the first surface. As the current collector, a current collector similar to the positive electrode current collector or the negative electrode current collector of the nonaqueous electrolyte battery according to the first approach is usable. The battery has a bipolar structure in which a positive electrode active material-containing layer is formed on the first surface of the current collector and a negative electrode active material-containing layer is formed on the second surface. The positive electrode active material-containing layer and the negative electrode active material-containing layer similar to those described in the first approach are usable.

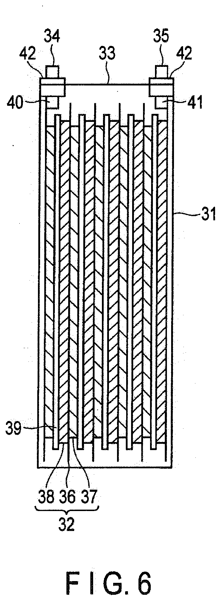

FIG. 6 shows an example of a bipolar type secondary battery. A secondary battery shown in FIG. 6 includes a metal container 31, an electrode body 32 having a bipolar structure, a sealing plate 33, a positive electrode terminal 34, and a negative electrode terminal 35. The metal container 31 has a bottomed rectangular cylindrical shape. As the metal container, a metal container similar to that described in the nonaqueous electrolyte battery is usable. The electrode body 32 having a bipolar structure includes a current collector 36, a positive electrode layer (positive electrode active material-containing layer) 37 stacked on one surface (first surface) of the current collector 36, and a negative electrode layer (negative electrode active material-containing layer) 38 stacked on the other surface (second surface) of the current collector 36. A separator or an electrolyte layer 39 is disposed between the electrode bodies 32 having a bipolar structure. The positive electrode terminal 34 and the negative electrode terminal 35 are fixed to the sealing plate 33 through an insulating member 42. One end of a positive electrode lead 40 is electrically connected to the positive electrode terminal 34, and the other end is electrically connected to the current collector 36. On the other hand, one end of a negative electrode lead 41 is electrically connected to the negative electrode terminal 35, and the other end is electrically connected to the current collector 36.

The battery module and the battery pack including the nonaqueous electrolyte battery of the first approach are included in the scope of this application.

Although the separator and the electrolyte layer can be arranged between the positive electrode or the positive electrode layer and the negative electrode or the negative electrode layer, the nonaqueous electrolyte battery may comprise a separator and/or an electrolyte layer facing the positive electrode or the positive electrode layer or a separator and/or an electrolyte layer facing the negative electrode or the negative electrode layer. The nonaqueous electrolyte battery shown in FIG. 4 includes a separator 15 facing the positive electrode 13 and a separator 15 facing the negative electrode 14.

Examples of the battery module include a battery module including, as constituent units, plural unit cells electrically connected in series or in parallel and a battery module including a unit comprising plural unit cells electrically connected in series or a unit comprising plural unit cells electrically connected in parallel.

Examples of a configuration in which plural nonaqueous electrolyte batteries are electrically connected in series or in parallel include a configuration in which plural batteries each comprising a container member are electrically connected in series or in parallel and a configuration in which plural electrode groups or bipolar type electrode bodies stored in a common casing are electrically connected in series or in parallel. In the former specific example, positive electrode terminals and negative electrode terminals of plural nonaqueous electrolyte batteries are connected by a metal busbar (for example, aluminum, nickel, or copper busbar). In the latter specific example, plural electrode groups or bipolar type electrode bodies in a state of being electrochemically insulated by partition walls are stored in a casing and electrically connected in series. In the nonaqueous electrolyte battery, when the number of batteries electrically connected in series is in a range of 5 to 7, the voltage compatibility with a lead battery is improved. In order to further improve the voltage compatibility with a lead battery, a configuration in which five or six unit cells are connected in series is preferable.

As a casing storing a battery module, a metal can formed of an aluminum alloy, iron, stainless steel, or the like, a plastic container, or the like may be used. A plate thickness of a container is preferably 0.5 mm or more.

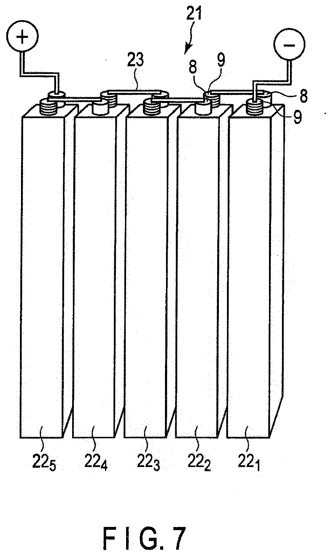

An example of a battery module will be described with reference to FIG. 7. A battery module 21 shown in FIG. 7 comprises as unit cells plural rectangular nonaqueous electrolyte batteries 22₁ to 22₅ shown in FIG. 1. The positive electrode conductive tab 8 of the battery 22₁ and the negative electrode conductive tab 9 of the battery 22₂ located adjacent thereto are electrically connected by a lead 23. Moreover, the positive electrode conductive tab 8 of the battery 22₂ and the negative electrode conductive tab 9 of the battery 22₃ located adjacent thereto are electrically connected by the lead 23. The batteries 22₁ to 22₅ are thus connected in series.

The battery pack according to the second approach may comprise one or a plurality of the nonaqueous electrolyte batteries (unit cells) according to the first approach. Plural nonaqueous electrolyte batteries are electrically connected in series, in parallel, or in a combination of in series and in parallel and can constitute a battery module. The battery pack according to the second approach may include plural battery modules.

The battery pack according to the second approach may further comprise a protective circuit. The protective circuit has a function of controlling charging and discharging of a nonaqueous electrolyte battery. Alternatively, a circuit included in an apparatus (such as electronic devices and automobiles) including a battery pack as a power source may be used as a protective circuit of a battery pack.

The battery pack according to the second approach may further comprise an external power distribution terminal. The external power distribution terminal is used for outputting a current from a nonaqueous electrolyte battery to the outside and inputting a current to the nonaqueous electrolyte battery. In other words, when the battery pack is used as a power source, a current is supplied to the outside through the external power distribution terminal. When the battery pack is charged, a charging current (including a regenerative energy of the power of a vehicle such as an automobile) is supplied to the battery pack through the external power distribution terminal.

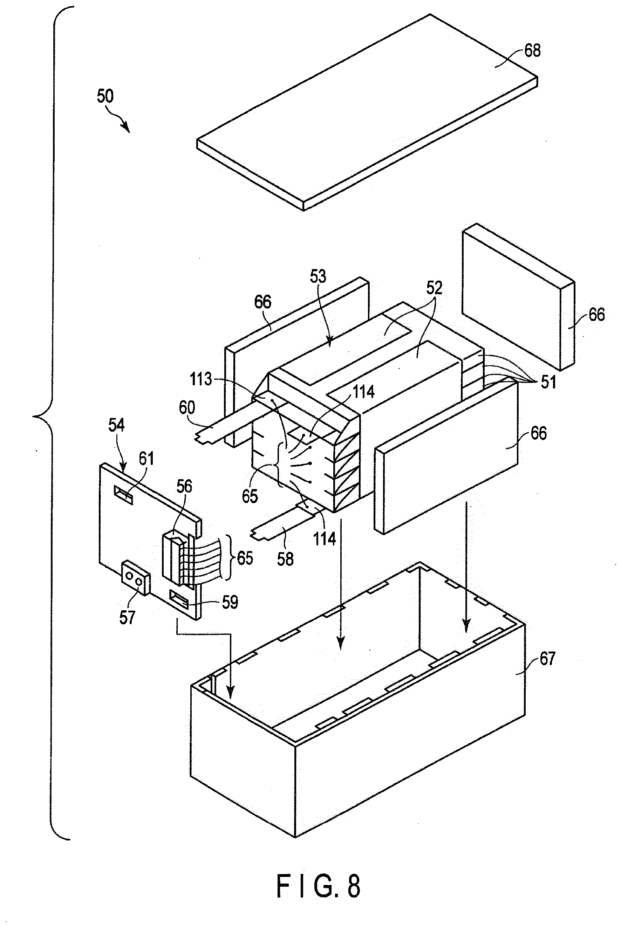

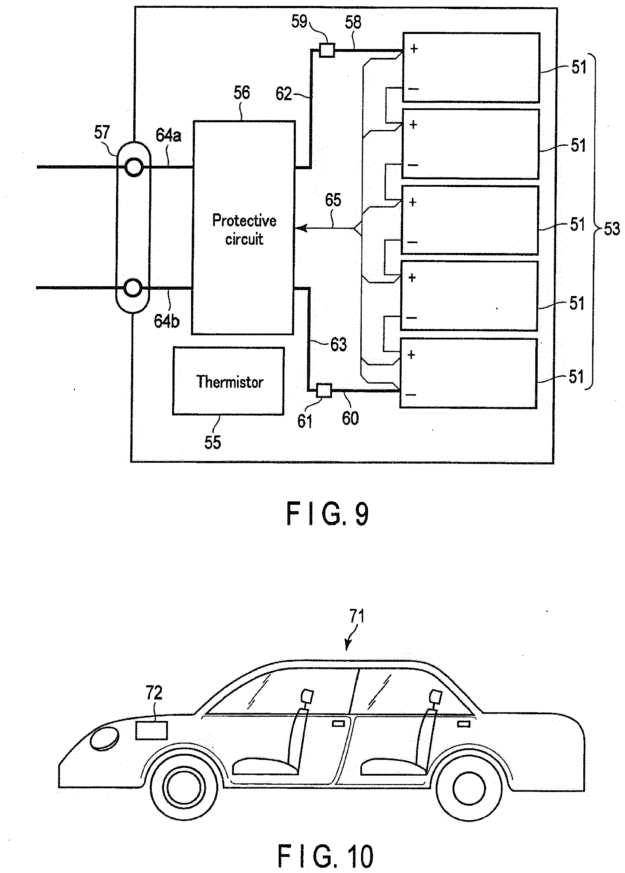

FIGS. 8 and 9 each show an example of a battery pack 50. The battery pack 50 includes plural flat type batteries. FIG. 8 is an exploded perspective view of the battery pack 50, and FIG. 9 is a block diagram showing an electric circuit of the battery pack 50 of FIG. 8.

Plural unit cells 51 are stacked such that a negative electrode terminal 113 and a positive electrode terminal 114 extending outward are arranged in the same direction, and they are fastened with an adhesive tape 52 to form a battery module 53. Those unit cells 51 are electrically connected in series as shown in FIG. 9.

A printed wiring board 54 is disposed facing side surfaces of the unit cells 51 from which the negative electrode terminal 113 and the positive electrode terminal 114 extend. As shown in FIG. 9, a thermistor 55, a protective circuit 56, and an external energizing terminal 57 for an external device as the external power distribution terminal are mounted on the printed wiring board 54. An insulating plate (not shown) is attached to a surface of the printed wiring board 54 facing the battery module 53, in order to avoid unnecessary connect with wirings of the battery module 53.

A positive electrode lead 58 is connected to the positive electrode terminal 114 positioned in the lowermost layer of the battery module 53, and its tip is inserted into a positive electrode connector 59 of the printed wiring board 54 to electrically connect it. A negative electrode lead 60 is connected to the negative electrode terminal 113 positioned in the uppermost layer of the battery module 53, and its tip is inserted into a negative electrode connector 61 of the printed wiring board 54 to electrically connect it. Those connectors 59 and 61 are connected to the protective circuit 56 through wirings 62 and 63 formed on the printed wiring board 54.

The thermistor 55 detects a temperature of the unit cell 51, and the detection signal thereof is transmitted to the protective circuit 56. The protective circuit 56 can interrupt a plus wiring 64a and a minus wiring 64b between the protective circuit 56 and the external power distribution terminal 57 for distributing power to external devices at a predetermined condition. The predetermined condition may include, for example, a condition in which the detection temperature of the thermistor 55 is a predetermined temperature or more. Also, the predetermined condition may include a condition in which over-charge, over-discharge, and overcurrent of the unit cell 51 are detected. Each of the unit cells 51 or the batery module is subjected to the detection of the over-charge and the like. When each of the unit cells 51 is detected, a battery voltage may be detected, or a positive electrode potential or a negative electrode potential may be detected. In the latter case, a lithium electrode used as a reference electrode is inserted into each of the unit cells 51. In the cases of FIGS. 8 and 9, wirings 65 are connected to each of the unit cells 51 for voltage detection, and detection signals are transmitted to the protective circuit 56 through these wirings 65.

A rubber or resin protective sheet 66 is disposed on each of three side surfaces of the battery module 53 except for the side surface from which the positive electrode terminal 114 and the negative electrode terminal 113 are projected.

The battery module 53 is stored in a housing container 67 together with the protective sheets 66 and the printed wiring board 54. In other words, the protective sheets 66 are arranged on both of inner surfaces in a long side direction of the housing container 67 and one inner surface in a short side direction of the housing container 67, and the printed wiring board 54 is disposed on the other inner surface in a short side direction. The battery module 53 is positioned in a space surrounded by the protective sheets 66 and the printed wiring board 54. A lid 68 is attached to a top face of the housing container 67.

For fixing the battery module 53, a thermally-shrinkable tape may be used instead of the adhesive tape 52. In this case, after the protective sheets are arranged at both of side faces of the battery module, it is surrounded by a thermally-shrinkable tape, and then the thermally-shrinkable tape is thermally shrunk to bind the battery module.

In FIGS. 8 and 9, although an approach in which the unit cells 51 are connected in series is described, they may be connected in parallel, for increasing a battery capacity. Alternatively, series connection and parallel connection may be combined. The battery packs may be further connected in series or in parallel.

Although the battery pack shown in FIGS. 8 and 9 comprises a single battery module, the battery pack according to the second approach may comprise plural battery modules. Plural battery modules are electrically connected in series, in parallel, or in a combination of in series and in parallel.

The approaches of the battery pack may be appropriately altered depending on the application thereof. The battery pack according to the approach may be used in application requiring excellent cycle performance at a large current. Specifically, the battery pack is used as a power source for a digital camera, a stationary battery, or a battery for a vehicle. In particular, the battery pack is suitably used for a vehicle. Examples of vehicles include two- or four-wheel hybrid electric vehicles, two- or four-wheel electric vehicles, motor-assisted bicycles, and a rail way car such as trains.

In a vehicle such as an automobile including the battery pack according to the approach, the battery pack is configured to recover regenerative energy of the power of the vehicle, for example.

FIG. 10 shows an automobile as an example comprising the battery pack as an example according to the second approach.

An automobile 71 shown in FIG. 10 includes a battery pack 72, as an example according to the second approach, in an engine room at the front of a vehicle body. A battery pack in an automobile may be installed at a position other than an engine room. For example, a battery pack may be installed at the rear of a vehicle body or under a seat.

Since the battery module and the battery pack of the second approach which include the nonaqueous electrolyte battery of the first approach, a battery module and a battery pack superior in high-temperature storage performance and large current performance can be achieved.

### EXAMPLES

Although examples of this invention will be described in detail below with reference to the drawings, the invention is not limited to the following examples.

### (Example 1) not according to the invention

As a positive electrode active material, LiMn₂O₄ secondary particles having an average secondary particle size of 7 um and having a spinel structure were used. An average primary particle size of primary particles constituting the LiMn₂O₄ secondary particles was 0.9 um. A surface of the LiMn₂O₄ particles was covered with Li₄Ti₅O₁₂ by the following method.

A solution was prepared by mixing titanium tetraisopropoxide (TTIP) and lithium alkoxide in an ethanol solvent at a ratio of 4:5. By using a tumbling-fluidized-bed coating apparatus, this solution was sprayed to be coated onto the LiMn₂O₄ particles such that a coating amount was 4% by weight. After drying at 80°C, heat treatment was performed in the atmosphere at 500°C for 1 hour, whereby a Li₄Ti₅O₁₂ layer having a thickness of 10 nm was coated onto the LiMn₂O₄ particles. The produced LiMn₂O₄ particles were mixed with 5% by weight of a graphite powder as a conductive agent and 5% by weight of PVdF as a binder, based on the entire positive electrode to be dispersed into a n-methylpyrrolidone (NMP) solvent, and thus to prepare a slurry. Then, the slurry was coated onto both surfaces of an aluminum alloy foil (having a purity of 99%) having a thickness of 15 um to be dried and thus to be subjected to a pressing process, whereby a positive electrode active material-containing layer was formed. A thickness of the positive electrode active material-containing layer on one side was 22 um. A density of the positive electrode was 2.8 g/cm³.

A negative electrode active material was produced by the following method.

A raw material in which SrCO₃, TiO₂, and Li₂CO₃ were prepared in a stoichiometric proportion was subjected to temporary calcination treatment at 650 °C for two hours. A mixture obtained by mixing a sample powder, obtained after grinding, with a polyvinyl alcohol of a carbon precursor was sprayed and dried to obtain a sample powder. Then, the sample powder was subjected to main calcination treatment at 1100°C under an inert atmosphere in an argon gas stream.

In the obtained sample powder, 1% by weight of a carbon material was coated onto a Li₂SrTi₆O₁₄ powder in which the average particle size of primary particles having a crystal structure of a space group Cmca according to X-ray diffraction and elemental analysis was 0.8 um. An acetylene black powder as a conductive agent, a graphite powder having an average particle size of 6 µm, and PVdF as a binder were mixed so that the weight ratio was 85:6:5:4 and then dispersed in a n-methylpyrrolidone (NMP) solvent. The resultant dispersion was stirred using a ball mill under conditions in which rotational speed was 1000 rpm and a stirring time was two hours to prepare a slurry. The resultant slurry was coated onto both surfaces of an aluminum alloy foil (purity: 99.3%) having a thickness of 15 µm, dried, and heat-pressed to form a negative electrode active material-containing layer. A thickness of the negative electrode active material-containing layer on one side was 20 um. A density of the negative electrode was 2.6 g/cm³. A BET specific surface area of the negative electrode active material-containing layer (a surface area per 1 g of the negative electrode active material-containing layer) was 8 m²/g. The porosity of the negative electrode was 35%. A method of measuring particles of the negative electrode active material is as described above.

The BET specific surface areas using N₂ adsorption of the negative electrode active material and the negative electrode were measured under the following conditions. 1 g of the powdered negative electrode active material or two negative electrodes having a size of 2 × 2 cm² was/were cut to be used as a sample. A BET specific surface area measuring apparatus manufactured by Yuasa Ionics Inc. was used, and a nitrogen gas was used as an adsorption gas.

The porosity of the negative electrode was calculated such that the volume of the negative electrode active material-containing layer was compared to the volume of negative electrode active material-containing layer obtained when the porosity was 0%, and an increase in the volume of the negative electrode active material-containing layer from the volume obtained when the porosity was 0% was taken to be a hole volume. When the negative electrode active material-containing layers are formed on both surfaces of a current collector, the volume of the negative electrode active material-containing layer is a total of the volumes of the negative electrode active material-containing layers on the both surfaces.

Subsequently, after production of an electrode group in which a positive electrode, a polyethylene (PE) porous film serving as a separator and having a thickness of 8 um, and a negative electrode were stacked, a belt-like positive electrode terminal was electrically connected to plural positive electrode aluminum foil current collectors, and, at the same time, a belt-like negative electrode terminal is electrically connected to plural negative electrode aluminum foil current collectors. This electrode group was inserted into a container (container member).

A liquid nonaqueous electrolyte as a nonaqueous electrolyte was prepared by dissolving 1.5 mol/L of LiPF₆ as a lithium salt in an organic solvent in which PC and DEC were mixed in a volume ratio of 2:1. The obtained nonaqueous electrolyte was injected into a container to produce a thin nonaqueous electrolyte secondary battery having the above-described structure shown in FIG. 3 and having a thickness of 6 mm, a width of 70 mm, and a height of 110 mm with a laminate formation size (cup size).

### (Examples 2 to 20 and Comparative Examples 1 to 10)

Example 2-10, 14, 15, 19 and 20 not according to the invention Nonaqueous electrolyte secondary batteries were produced similarly to Example 1 except that the composition and the average secondary particle size of the positive electrode active material, the composition and the thickness of the covering layer, the composition and the average primary particle size of the negative electrode active material, the shortest distance between the positive electrode and the negative electrode, and the composition of the separator or the electrolyte layer were changed as shown in the following Tables 1 to 3.

The thickness of the covering layer was adjusted by changing the amount of coating applied to the positive electrode active material particles.

In Examples 9 and 10, a slurry prepared by dispersing an alumina powder (96% by weight) as an inorganic solid powder and PVdF (4% by weight) in an NMP solvent was coated onto the negative electrode and then pressed, whereby an inorganic porous layer having a thickness of 3 um and a porosity of 40% was used as a separator.

In the positive electrode active materials of Examples 16 to 20, after formation of a Li₄Ti₅O₁₂ layer on the surface of the positive electrode active material secondary particles, carbon material particles having an average particle size of 5 nm were adhered such that the amount of the adhered carbon material particles was 0.1% by weight. The average particle size of the primary particles of the positive electrode active material secondary particles was 80 nm.

Amethod of manufacturing a nonaqueous electrolyte battery including the solid electrolyte layer of each of Examples 11, 12, 13, and 16 to 18 will be described.

Garnet type Li₇La₃Zr₂O₁₂ particles in which the specific surface area using the BET method with N₂ adsorption was 50 m²/g and the average size (average diameter) of the primary particles was 0.1 um, a nonaqueous electrolyte solution in which LiPF₆ was dissolved at 1M in a mixed solvent of propylene carbonate (PC) and diethyl carbonate (DEC) having a volume ratio of 1:2, polyacrylonitrile (PAN), and a PVdF binder were mixed at a weight ratio of 96:2:0.54:1.46 and compounded. The obtained composition was coated onto the surface of the positive electrode active material-containing layer of the positive electrode and the surface of the negative electrode active material-containing layer of the negative electrode to be heat treated at 60°C for 24 hours, and thus to form a solid electrolyte layer having a thickness of 5 um.

The negative electrode was put on the positive electrode so as to face the positive electrode, thus forming an electrode group. This electrode group was stored in a thin metal can formed of an aluminum alloy (Al purity: 99% by weight) having a thickness of 0.25 mm.

Subsequently, a sealing plate was attached to an opening of the metal can, and a rectangular nonaqueous electrolyte secondary battery having the structure shown in FIG. 1 and having a thickness of 13 mm, a width of 62 mm, and a height of 96 mm was obtained.

The obtained nonaqueous electrolyte batteries of Examples 1 to 20 and Comparative Examples 1 to 10 were charged by a constant current of 3 A for 90 minutes at 25°C to 3 V and thereafter discharged to 1.5 V at a current of 1 C (3 A), and the discharge capacity at this time was measured. The obtained discharge capacity as 25°C discharge capacity was shown in Tables 4 and 5.

These batteries were charged by a constant current of 3 A for 90 minutes at 25°C to 3 V and thereafter discharged to 1.5 V at a current of 10 C (30 A), and the discharge capacity at this time was measured. The capacity during discharge at 10 C is represented, provided that the capacity during discharge at 1 C is defined as 100%, and this is shown as a 10 C discharge capacity retention ratio (%) which is a large current discharge performance in Tables 4 and 5.

The conditions of a high-temperature storage test at 60°C are as follows. After each battery was charged by a constant current of 3 A at 25°C to a charge maximum voltage (3 V) and, the remaining capacity after storage in a 60°C environment for three months was measured, and results showing the remaining capacity, provided that the discharge capacity before storage is defined as 100%, are shown in Tables 4 and 5.

### [Table 1]

**Table 1**

| | Positive electrode active material | Positive electrode active material average secondary particle size (µm) | Covering layer Composition and thickness | Negative electrode active material | Negative electrode active material average primary particle size (µm) | Distance between positive electrode and negative electrode (µm) | Kind of separator or electrolyte layer |
|---|---|---|---|---|---|---|---|
| Example 1 | LiMn₂O₄ | 7 | Li₄Ti₅O₁₂(10nm) | Li₂SrTi₆O₁₄ | 0.8 | 8 | PE porous film |
| Example 2 | LiMn₂O₄ | 7 | Li₄Ti₅O₁₂(10nm) | Li₂Na_{1.5}Ti_{5.5}Nb_{0.5}O₁₄ | 0.8 | 10 | PE porous film |
| Example 3 | LiMn₂O₄ | 7 | Li₄Ti₅O₁₂(10nm) | TiNb₂O₇ | 1.0 | 8 | PE porous film |
| Example 4 | LiMn₂O₄ | 7 | Li₄Ti₅O₁₂(10nm) | Li₄Ti₅O₁₂ | 0.7 | 8 | PE porous film |
| Example 5 | LiMn₂O₄ | 7 | Li₄Ti₅O₁₂(15nm) | Li₂Na_{1.5}Ti_{5.5}Nb_{0.5}O₁₄ | 1.2 | 8 | PE porous film |
| Example 6 | LiMn₂O₄ | 7 | Li₄Ti₅O₁₂(20nm) | Li₂Na_{1.5}Ti_{5.5}Nb_{0.5}O₁₄ | 1.2 | 8 | PE porous film |
| Example 7 | LiMn₂O₄ | 7 | Li₄Ti₅O₁₂(30nm) | Li₂Na_{1.5}Ti_{5.5}Nb_{0.5}O₁₄ | 1.2 | 8 | PE porous film |
| Example 8 | LiMn₂O₄ | 7 | Li₄Ti₅O₁₂(15nm) | Li₂Na_{1.5}Ti_{5.5}Nb_{0.5}0₁₄ | 1.2 | 12 | PE porous film |
| Example 9 | LiMn₂O₄ | 7 | Li₄Ti₅O₁₂(15nm) | Li₂Na_{1.5}Ti_{5.5}Nb_{0.5}O₁₄ | 1.2 | 5 | Inorganic porous layer |
| Example 10 | LiMn₂O₄ | 7 | Li₄Ti₅O₁₂(10nm) | Li₄Ti₅O₁₂ | 0.7 | 3 | Inorganic porous layer |
| Example 11 | LiMn₂O₄ | 7 | Li₄Ti₅O₁₂(5nm) | Li₄Ti₅O₁₂ | 0.7 | 3 | Solid electrolyte |
| | | | | | | | Li₇La₃Zr₂O₁₂ (96 wt%) + PAN gel polymer (4 wt%) |
| Example 12 | LiMn₂O₄ | 7 | Li₄Ti₅O₁₂(10nm) | TiO₂(B) | 0.3 | 5 | Solid electrolyte |
| | | | | | | | Li₇La₃Zr₂O₁₂ (96 wt%) + PAN gel polymer (4 wt%) |

### [Table 2]

**Table 2**

| | Positive electrode active material | Positive electrode active material average secondary particle size (µm) | Covering layer Composition and thickness | Negative ` electrode active material | Negative electrode active material average primary particle size (µm) | Distance between positive electrode and negative electrode (µm) | Kind of separator or electrolyte layer |
|---|---|---|---|---|---|---|---|
| Example 13 | LiNi_{0.8}Co_{0.1}Mn_{0.1}O₂ | 5 | Li₄Ti₅O₁₂(10nm) | TiNb₂O₇ | 1.2 | 5 | Solid electrolyte |
| | | | | | | | Li₇La₃Zr₂O₁₂ (96 wt%) + PAN gel polymer (4 wt%) |
| Example 14 | LiNi_{0.8}Co_{0.15}Al_{0.05}O₂ | 5 | Li₄Ti₅O₁₂(10nm) | TiNb₂O₇ | 0.3 | 10 | PE porous film |
| Example 15 | LiMn₂O₄ | 3 | Li₄Ti₅O₁₂(3nm) | Li₄Ti₅O₁₂ | 0.7 | 8 | PE porous film |
| Example 16 | LiMn_{0.9}Fe_{0.1}PO₄ | 5 | Li₄Ti₅O₁₂(3nm) | Li₄Ti₅O₁₂ | 0.7 | 5 | Solid electrolyte |
| | | | | | | | Li₇La₃Zr₂O₁₂ (96 wt%) + PAN gel polymer (4 wt%) |
| Example 17 | LiFePO₄ | 5 | Li₄Ti₅O₁₂(10nm) | TiO₂(B) | 0.3 | 5 | Solid electrolyte |
| | | | | | | | Li₇La₃Zr₂O₁₂ (96 wt%) + PAN gel polymer (4 wt%) |
| Example 18 | LiMn_{0.85}Fe_{0.1}Mg_{0.05}PO₄ | 5 | Li₄Ti₅O₁₂(3nm) | Li₄Ti₅O₁₂ | 0.3 | 5 | Solid electrolyte |
| | | | | | | | Li₇La₃Zr₂O₁₂ (96 wt%) + PAN gel polymer (4 wt%) |
| Example 19 | LiMn_{0.85}Fe_{0.1}Mg_{0.05}PO₄ | 5 | Li₄Ti₅O₁₂(3nm) | TiO₂(B) | 0.3 | 8 | PE porous film |
| Example 20 | LiMn_{0.85}Fe_{0.1}Mg_{0.05}PO₄ | 5 | Li₄Ti₅O₁₂(3nm) | TiNb₂O₇ | 0.3 | 8 | PE porous film |

### [Table 3]

**Table 3**

| | Positive electrode active material | Positive electrode active material average secondary particle size (µm) | Covering layer Composition and thickness | Negative electrode active material | Negative electrode active material average primary particle size (pm) | Distance between positive electrode and negative electrode (µm) | Kind of separator or electrolyte layer |
|---|---|---|---|---|---|---|---|
| Comparative Example 1 | LiMn₂O₄ | 10 | Nothing | Li₄Ti₅O₁₂ | 0.7 | 8 | PE porous film |
| Comparative Example 2 | LiMn₂O₄ | 10 | Nothing | Li₄Ti₅O₁₂ | 0.7 | 15 | PE porous film |
| Comparative Example 3 | LiMn₂O₄ | 10 | Nothing | Li₄Ti₅O₁₂ | 0.7 | 25 | PE porous film |
| Comparative Example 4 | LiNi_{0.8}Co_{0.1}Mn_{0.1}O₂ | 5 | Nothing | TiNb₂O₇ | 1.2 | 8 | PE porous film |
| Comparative Example 5 | LiNi_{0.8}Co_{0.1}Mn_{0.1}O₂ | 5 | Nothing | TiNb₂O₇ | 1.2 | 25 | PE porous film |
| Comparative Example 6 | LiMn₂O₄ | 10 | Li₄Ti₅O₁₂(1nm) | Li₄Ti₅O₁₂ | 0.7 | 25 | PE porous film |
| Comparative Example 7 | LiMn₂O₄ | 10 | Li₄Ti₅O₁₂(35nm) | Li₄Ti₅O₁₂ | 0.7 | 25 | PE porous film |
| Comparative Example 8 | LiMn₂O₄ | 10 | Anatase TiO₂ (1 nm) | Li₄Ti₅O₁₂ | 0.7 | 25 | PE porous film |
| Comparative Example 9 | LiNi_{0.8}Co_{0.1}Mn_{0.1}O₂ | 3 | Nothing | TiNb₂O₇ | 2 | 30 | PE porous film |
| Comparative Example 10 | LiNi_{0.8}Co_{0.1}Mn_{0.1}O₂ | 25 | Li₄Ti₅O₁₂(35nm) | TiNb₂O₇ | 1 | 30 | PE porous film |

### [Table 4]

**Table 4**

| | Discharge capacity at 25°C (Ah) | Remaining capacity retention ratio after storage at 60°C (%) | 10 C discharge capacity retention ratio (%) |
|---|---|---|---|
| Example 1 | 3.1 | 90 | 85 |
| Example 2 | 3.1 | 88 | 82 |
| Example 3 | 3.6 | 85 | 83 |
| Example 4 | 3.2 | 92 | 90 |
| Example 5 | 3.1 | 90 | 83 |
| Example 6 | 3.1 | 92 | 82 |
| Example 7 | 2.9 | 94 | 78 |
| Example 8 | 3.2 | 86 | 87 |
| Example 9 | 3.3 | 84 | 94 |
| Example 10 | 3.3 | 80 | 96 |
| Example 11 | 3.4 | 88 | 97 |
| Example 12 | 3.8 | 90 | 88 |
| Example 13 | 3.8 | 92 | 89 |
| Example 14 | 3.7 | 85 | 83 |
| Example 15 | 3.2 | 88 | 91 |
| Example 16 | 3.3 | 92 | 80 |
| Example 17 | 3.3 | 94 | 84 |
| Example 18 | 3.3 | 93 | 85 |
| Example 19 | 3.4 | 82 | 80 |
| Example 20 | 3.45 | 86 | 82 |

### [Table 5]

**Table 5**

| | Discharge capacity at 25°C (Ah) | Remaining capacity retention ratio after storage at 60°C (%) | 10 C discharge capacity retention ratio (%) |
|---|---|---|---|
| Comparative Example 1 | 3.2 | 40 | 65 |
| Comparative Example 2 | 2.9 | 60 | 60 |
| Comparative Example 3 | 2.7 | 65 | 55 |
| Comparative Example 4 | 3.7 | 45 | 55 |
| Comparative Example 5 | 3.7 | 65 | 40 |
| Comparative Example 6 | 3.2 | 68 | 50 |
| Comparative Example 7 | 3.1 | 65 | 20 |
| Comparative Example 8 | 3.1 | 60 | 40 |
| Comparative Example 9 | 3.7 | 42 | 59 |
| Comparative Example 10 | 3.6 | 55 | 30 |

As seen in Table 1 to 5, in the nonaqueous electrolyte batteries of Examples 1 to 20, as compared with Comparative Examples 1 to 10, the remaining capacity retention ratio after storage at 60°C and the 10 C discharge capacity retention ratio are high, and the high-temperature storage performance and the
large current discharge performance are excellent.

Comparation of Examples 5 to 7 shows that the thinner the covering layer, the more excellent the large current discharge performance, and the thicker the covering layer, the more excellent the high-temperature storage performance.

Comparison of Examples 5, 7, and 8 shows that the discharge capacity and the large current discharge performance can be improved by reducing the shortest distance between the positive electrode and the negative electrode.

Results of Comparative Examples 1 to 5 show that the longer the distance between the positive electrode and the negative electrode, the higher the high-temperature storage performance, but, on the other hand, the large current discharge performance is deteriorated.

A battery module comprising a plurality of the nonaqueous electrolyte batteries according to the approaches connected in series is preferable. The number of the batteries connected in series is preferably a multiple of 5 (5n (n is an integer)) or a multiple of 6 (6n (n is an integer)). For example, in Examples, when n = 1, the batteries could be charged and discharged in a voltage range of 15 V to 10 V, so that a battery module superior in compatibility with a lead battery was provided. In a battery module comprising five batteries of Examples 2 and 5 to 9 which are connected in series and include the positive electrode containing a manganese composite oxide having a spinel structure and the negative electrode containing a sodium-niobium-titanium-containing composite oxide, such a high voltage that an intermediate voltage was 13.5 V was obtained.

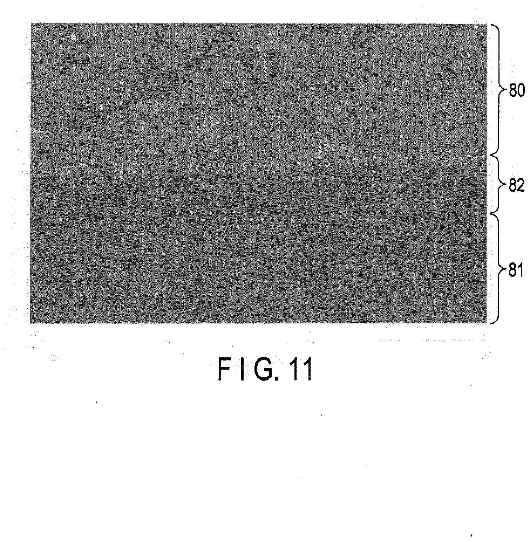

FIG. 11 shows a scanning electron microscope (SEM) photograph showing the positive electrode, the solid electrolyte layer, and the negative electrode in the battery of Example 16. A layer shown on the upper portion of FIG. 11 is a positive electrode active material-containing layer 80. A layer shown on the lower portion of FIG. 11 is a negative electrode active material-containing layer 81. A solid electrolyte layer 82 is disposed between the positive electrode active material-containing layer 80 and the negative electrode active material-containing layer 81. The surface roughness of the positive electrode active material-containing layer 80 is higher than that of the negative electrode active material-containing layer 81. Thus, the distance between the positive electrode and the negative electrode varies.

According to the nonaqueous electrolyte battery of at least one of the approaches or Examples, the shortest distance between the positive electrode and the negative electrode is from 3 µm to 12 um. The average secondary particle size of the positive electrode active material secondary particles is 3 um or more to 25 µm or less. At least a portion of the surfaces of the positive electrode active material secondary particles is covered with a covering layer containing a lithium titanium oxide and having a thickness of 3 nm or more to 30 nm or less. As a result, it is possible to provide a nonaqueous electrolyte battery superior in high-temperature storage performance and large current performance.

## Claims

1. A nonaqueous electrolyte battery comprising:
a positive electrode (3) comprising positive electrode active material secondary particles having an average secondary particle size of 3 um to 25 um and a layer which covers at least a portion of surfaces of the positive electrode active material secondary particles, contains a lithium titanium oxide, and has a thickness of 3 nm to 30 nm;
a negative electrode (4); and
a nonaqueous electrolyte,
wherein a shortest distance between the positive electrode (3) and the negative electrode (4) is from 3 µm to 12 µm and wherein the positive electrode active material secondary particles comprise at least one selected from the group consisting of a lithium manganese composite oxide having a spinel structure represented by LiₓMn₂O₄ where 0 ≤ x ≤ 1, a lithium nickel cobalt manganese composite oxide represented by LiₓNi_{1-e-f}CoₑMn_{f}O₂ where 0 ≤ x ≤ 1.1, 0 < e < 1, 0 < f < 1, a lithium nickel aluminum composite oxide represented by LiₓNi_{1-z-q}Co_{z}Al_{q}O₂ where 0 ≤ x ≤ 1, 0 ≤ z ≤ 1, 0 < q ≤ 0.2, a lithium nickel manganese composite oxide having a spinel structure represented by LiₓNi_{d}Mn_{2-d}O₄ where 0 ≤ x ≤ 1, 0.3 ≤ d ≤ 0.6, a lithium-phosphorus composite oxide having an olivine structure represented by LiₓCoPO₄ where 0 < x ≤ 1, and a phosphate compound having an olivine structure represented by LiₓFe_{1-y-z}Mn_{y}M_{z}PO₄ where M is at least one element selected from the group consisting of Mg, Al, Ti, and Zr, 0 ≤ x ≤ 1.1, 0 ≤ y ≤ 1, 0 ≤ z ≤ 0.2,
wherein the nonaqueous electrolyte is a liquid organic electrolyte or a gel organic electrolyte, and
the nonaqueous electrolyte battery further comprises an electrolyte layer (5) facing at least one of the positive electrode (3) and the negative electrode (4), and the electrolyte layer (5) comprises the nonaqueous electrolyte and lithium-containing oxide particles consisting of at least one selected from the group consisting of Li₅₊ₓAₓLa₃₋ₓM₂O₁₂ where A is at least one element selected from the group consisting of Ca, Sr, and Ba, M is Nb and/or Ta, and x is in a range of 0.5 or less including 0, Li₃M₂₋ₓL₂O₁₂ where M is Nb and/or Ta, L contains Zr, and x is in a range of 0.5 or less including 0, Li₇₋₃ₓAlₓLa₃Zr₃O₁₂ where x is in a range of 0.5 or less including 0, Li₇La₃Zr₂O₁₂, LiM1₂(PO₄)₃ where M1 is one or more elements selected from the group consisting of Ti, Ge, Sr, Zr, Sn, and Al, Li₁₊ₓAlₓGe₂₋ₓ(PO₄)₃ where x is in a range of 0 or more to 0.5 or less, Li₁₊ₓAlₓZr₂₋ₓ(PO₄)₃ where x is in a range of 0 or more to 0.5 or less, and Li₁₊ₓAlₓTi₂₋ₓ(PO₄)₃ where x is in a range of 0 or more to 0.5 or less.

2. The nonaqueous electrolyte battery according to claim 1, wherein the positive electrode active material secondary particles comprise at least one selected from the group consisting of the lithium manganese composite oxide, the lithium nickel cobalt manganese composite oxide, the lithium nickel aluminum composite oxide, and the phosphate compound having an olivine structure.

3. The nonaqueous electrolyte battery according to claim 1, wherein the positive electrode active material secondary particles contain Mn and/or Fe.

4. The nonaqueous electrolyte battery according to any one of claims 1 to 3, wherein the lithium titanium oxide is represented by a chemical formula: Li_{4+σ}Ti₅O₁₂ where -0.5 ≤ σ ≤ 0.5.

5. The nonaqueous electrolyte battery according to any one of claims 1 to 4, wherein the negative electrode (4) comprises a titanium-containing metal oxide.

6. The nonaqueous electrolyte battery according to claim 5, wherein the titanium-containing metal oxide comprises at least one selected from the group consisting of a lithium titanium composite oxide, an oxide of titanium, a niobium-titanium composite oxide, and a sodium-niobium-titanium-containing composite oxide.

7. The nonaqueous electrolyte battery according to any one of claims 1 to 6, further comprising a separator (5) facing at least one of the positive electrode (3) and the negative electrode (4).

8. The nonaqueous electrolyte battery according to any one of claims 1 to 7, wherein the nonaqueous electrolyte comprises an organic solvent and a lithium salt dissolved in the organic solvent,
wherein the organic solvent comprises at least one selected from the group consisting of propylene carbonate, ethylene carbonate, diethyl carbonate, dimethyl carbonate, methylethyl carbonate, dimethoxyethane, diethoxyethane, tetrahydrofuran, dioxolan, γ-butyrolactone, acetonitrile, and sulfolane, and
the lithium salt comprises at least one selected from the group consisting of LiPF₆, LiClO₄, LiBF₄, LiCF₃SO₃, LiN(FSO₂)₂, LiN(CF₃SO₂)₂, LiAsF₆, LiN(C₂F_{S}SO₂)₂, Li(CF₃SO₂)₃C, and LiB[(OCO)₂]₂.

9. The nonaqueous electrolyte battery according to any one of claims 1 to 8, wherein the shortest distance between the positive electrode (3) and the negative electrode (4) is from 3 um to 8 µm.

10. A battery pack (50) comprising the nonaqueous electrolyte battery according to any one of claims 1 to 9.

11. The battery pack (50) according to claim 10, further comprising:
an external power distribution terminal (57); and
a protective circuit (56).

12. The battery pack (50) according to claim 10, comprising a plurality of the nonaqueous electrolyte batteries,
wherein the nonaqueous electrolyte batteries are electrically connected in series, in parallel, or in a combination of in series and in parallel.

13. A vehicle (71) comprising the battery pack (50) according to any one of claims 10 to 12.

14. The vehicle (71) according to claim 13, wherein the battery pack (50) is configured to recover a regenerative energy of a power of the vehicle (71).

## Patentansprüche

1. Batterie mit nichtwässrigem Elektrolyt, umfassend:
eine positive Elektrode (3), umfassend Positivelektrodenaktivmaterial-Sekundärpartikel mit einer durchschnittlichen Sekundärpartikelgröße von 3 µm bis 25 µm und eine Schicht, die mindestens einen Teil der Oberflächen der Positivelektrodenaktivmaterial-Sekundärpartikel bedeckt, ein Lithium-Titan-Oxid enthält und eine Dicke von 3 nm bis 30 nm aufweist;
eine negative Elektrode (4); und
einen nicht-wässrigen Elektrolyt,
wobei ein kürzester Abstand zwischen der positiven Elektrode (3) und der negativen Elektrode (4) 3 µm bis 12 µm beträgt, und
wobei die Positivelektrodenaktivmaterial-Sekundärpartikel mindestens eines umfassen, das aus der Gruppe ausgewählt ist, die aus einem Lithium-Mangan-Kompositoxid mit einer Spinellstruktur, dargestellt durch LiₓMn₂O₄, worin 0 ≤ x ≤ 1, einem Lithium-Nickel-Cobalt-Mangan-Kompositoxid, dargestellt durch LiₓNi_{1-e-f}CoₑMn_{f}O₂, worin 0 ≤ x ≤ 1,1, 0 < e < 1, 0 < f < 1, einem Lithium-Nickel-Aluminium-Kompositoxid, dargestellt durch LiₓNi_{i-z-q}Co_{z}Al_{q}O₂, worin 0 ≤ x ≤ 1, 0 ≤ z ≤ 1, 0 < q ≤ 0,2, einem Lithium-Nickel-Mangan-Kompositoxid mit einer Spinellstruktur, dargestellt durch LiₓNi_{d}Mn_{2-d}O₄, worin 0 ≤ x ≤ 1, 0,3 ≤ d ≤ 0,6, einem Lithium-Phosphor-Kompositoxid mit einer Olivinstruktur, dargestellt durch LiₓCoPO₄, worin 0 < x ≤ 1, und einer Phosphatverbindung mit einer Olivinstruktur, dargestellt durch LiₓFe_{1-y-z}Mn_{y}M_{z}PO₄, worin M mindestens ein Element, ausgewählt aus der Gruppe, bestehend aus Mg, Al, Ti und Zr, ist, 0 ≤ x ≤ 1,1, 0 ≤ y ≤ 1, 0 ≤ z ≤ 0,2, besteht,
wobei der nichtwässrige Elektrolyt ein flüssiger organischer Elektrolyt oder ein organischer Gelelektrolyt ist, und
die Batterie mit nichtwässrigem Elektrolyt weiterhin eine Elektrolytschicht (5) umfasst, die mindestens einer von der positiven Elektrode (3) und der negativen Elektrode (4) zugewandt ist, und die Elektrolytschicht (5) den nichtwässrigen Elektrolyt und lithiumhaltige Oxidpartikel, bestehend aus mindestens einem, ausgewählt aus der Gruppe, bestehend aus Li₅₊ₓAₓLa₃₋ₓM₂O₁₂, worin A mindestens ein Element ist, das aus der Gruppe ausgewählt ist, die aus Ca, Sr und Ba besteht, M Nb und/oder Ta ist, und x im Bereich von 0,5 oder weniger, einschließlich 0, liegt, Li₃M₂₋ₓL₂O₁₂, worin M Nb und/oder Ta ist, L Zr enthält und x im Bereich von 0,5 oder weniger, einschließlich 0, liegt, Li₇₋₃ₓAlₓLa₃Zr₃O₁₂, worin x im Bereich von 0,5 oder weniger, einschließlich 0, liegt, Li₇La₃Zr₂O₁₂, LiM1₂(PO₄)₃, worin M1 ein oder mehrere Elemente ist, die aus der Gruppe ausgewählt sind, die aus Ti, Ge, Sr, Zr, Sn und Al besteht, Li₁₊ₓAlₓGe₂₋ₓ(PO₄)₃, worin x im Bereich von 0 oder mehr bis 0,5 oder weniger liegt, Li₁₊ₓAlₓZr₂₋ₓ(PO₄)₃, worin x im Bereich von 0 oder mehr bis 0,5 oder weniger liegt, und Li₁₊ₓAlₓTi₂₋ₓ(PO₄)₃, worin x im Bereich von 0 oder mehr bis 0,5 oder weniger liegt, umfasst.

2. Batterie mit nichtwässrigem Elektrolyt gemäß Anspruch 1, wobei die Positivelektrodenaktivmaterial-Sekundärpartikel mindestens eines, ausgewählt aus der Gruppe, bestehend aus dem Lithium-Mangan-Kompositoxid, dem Lithium-Nickel-Cobalt-Mangan-Kompositoxid, dem Lithium-Nickel-Aluminium-Kompositoxid und der Phosphatverbindung mit Olivinstruktur, umfassen.

3. Batterie mit nichtwässrigem Elektrolyt gemäß Anspruch 1, wobei die Positivelektrodenaktivmaterial-Sekundärpartikel Mn und/oder Fe enthalten.

4. Batterie mit nichtwässrigem Elektrolyt gemäß einem der Ansprüche 1 bis 3, wobei das Lithium-Titan-Oxid durch eine chemische Formel dargestellt wird: Li_{4+σ}Ti₅O₁₂, worin -0,5 ≤ σ ≤ 0,5.

5. Batterie mit nichtwässrigem Elektrolyt gemäß einem der Ansprüche 1 bis 4, wobei die negative Elektrode (4) ein titanhaltiges Metalloxid umfasst.

6. Batterie mit nichtwässrigem Elektrolyt gemäß Anspruch 5, wobei das titanhaltige Metalloxid mindestens eines, ausgewählt aus der Gruppe, bestehend aus einem Lithium-Titan-Kompositoxid, einem Oxid von Titan, einem Niob-Titan-Kompositoxid und einem Natrium-Niob-Titan-haltigen Kompositoxid, umfasst.

7. Batterie mit nichtwässrigem Elektrolyt gemäß einem der Ansprüche 1 bis 6, ferner umfassend einen Separator (5), der mindestens einer von der positiven Elektrode (3) und der negativen Elektrode (4) zugewandt ist.

8. Batterie mit nichtwässrigem Elektrolyt gemäß einem der Ansprüche 1 bis 7, wobei der nichtwässrige Elektrolyt ein organisches Lösungsmittel und ein in dem organischen Lösungsmittel gelöstes Lithiumsalz umfasst,
wobei das organische Lösungsmittel mindestens eines, ausgewählt aus der Gruppe, bestehend aus Propylencarbonat, Ethylencarbonat, Diethylcarbonat, Dimethylcarbonat, Methylethylcarbonat, Dimethoxyethan, Diethoxyethan, Tetrahydrofuran, Dioxolan, γ-Butyrolacton, Acetonitril und Sulfolan, umfasst und
das Lithiumsalz mindestens eines, ausgewählt aus der Gruppe, bestehend aus LiPF₆, LiClO₄, LiBF₄, LiCF₃SO₃, LiN(FSO₂)₂, LiN(CF₃SO₂)₂, LiAsF₆, LiN(C₂F₅SO₂)₂, Li(CF₃SO₂)₃C und LiB[(OCO)₂]₂, umfasst.

9. Batterie mit nichtwässrigem Elektrolyt gemäß einem der Ansprüche 1 bis 8, wobei der kürzeste Abstand zwischen der positiven Elektrode (3) und der negativen Elektrode (4) zwischen 3 µm und 8 µm beträgt.

10. Batteriepack (50), umfassend die Batterie mit nichtwässrigem Elektrolyt gemäß einem der Ansprüche 1 bis 9.

11. Batteriepack (50) gemäß Anspruch 10, ferner umfassend:
einen externen Stromverteilungsanschluss (57); und
eine Schutzschaltung (56).

12. Batteriepack (50) gemäß Anspruch 10, umfassend eine Mehrzahl der Batterien mit nichtwässrigem Elektrolyt,
wobei die Batterien mit nichtwässrigem Elektrolyt elektrisch in Reihe, parallel oder in einer Kombination aus in Reihe und parallel geschaltet sind.

13. Fahrzeug (71), umfassend den Batteriepack (50) gemäß einem der Ansprüche 10 bis 12.

14. Fahrzeug (71) gemäß Anspruch 13, wobei der Batteriepack (50) zum Zurückgewinnen einer regenerativen Energie aus einer Leistung des Fahrzeugs (71) konfiguriert ist.

## Revendications

1. Batterie à électrolyte non aqueux comprenant :
une électrode positive (3) comprenant des particules secondaires de matériau actif d'électrode positive présentant une taille de particules secondaires moyenne de 3 µm à 25 µm et une couche qui recouvre au moins une partie de surfaces des particules secondaires de matériau actif d'électrode positive, contient un oxyde de lithium-titane et présente une épaisseur de 3 nm à 30 nm ;
une électrode négative (4) ; et
un électrolyte non aqueux,
dans laquelle une distance la plus courte entre l'électrode positive (3) et l'électrode négative (4) va de 3 µm à 12 µm et
dans laquelle les particules secondaires de matériau actif d'électrode positive comprennent au moins un élément sélectionné parmi le groupe consistant en un oxyde composite de lithium-manganèse présentant une structure spinelle représentée par LiₓMn₂O₄ où 0 ≤ x ≤ 1, un oxyde composite de lithium-nickel-cobalt-manganèse représenté par LiₓNi_{1-e-f}CoₑMn_{f}O₂ où 0 ≤ x ≤ 1,1, 0 < e < 1, 0 < f < 1, un oxyde composite de lithium-nickel-aluminium représenté par LiₓNi_{1-z-q}Co_{z}Al_{q}O₂ où 0 ≤ x ≤ 1, 0 ≤ z ≤ 1, 0 < q ≤ 0,2, un oxyde composite de lithium-nickel-manganèse présentant une structure spinelle représentée par LiₓNi_{d}Mn_{2-d}O₄ où 0 ≤ x ≤ 1, 0,3 ≤ d ≤ 0,6, un oxyde composite de lithium-phosphore présentant une structure olivine représentée par LiₓCoPO₄ où 0 < x ≤ 1, et un composé phosphate présentant une structure olivine représentée par LiₓFe_{1-y-z}Mn_{y}M_{z}PO₄ où M est au moins un élément sélectionné parmi le groupe consistant en Mg, Al, Ti et Zr, 0 ≤ x ≤ 1,1, 0 ≤ y ≤ 1 0 ≤ z ≤ 0,2,
dans laquelle l'électrolyte non aqueux est un électrolyte organique liquide ou un électrolyte organique gel, et
la batterie à électrolyte non aqueux comprend en outre une couche (5) d'électrolyte faisant face à au moins une parmi l'électrode positive (3) et l'électrode négative (4), et la couche (5) d'électrolyte comprend l'électrolyte non aqueux et des particules d'oxyde contenant du lithium consistant en au moins un sélectionné élément parmi le groupe consistant en Li₅₊ₓAₓLa₃₋ₓM₂O₁₂ où A est au moins un élément sélectionné parmi le groupe consistant en Ca, Sr et Ba, M est du Nb et/ou du Ta, et x se situe dans une plage de 0,5 ou moins incluant 0, Li₃M₂₋ₓL₂O₁₂ où M est du Nb et/ou du Ta, L contient du Zr, et x se situe dans une plage de 0,5 ou moins incluant 0, Li₇₋₃ₓAlₓLa₃Zr₂O₁₂ où x se situe dans une plage de 0,5 ou moins incluant 0, Li₇La₃Zr₂O₁₂, LiM1₂(PO₄)₃ où M1 est un ou plusieurs éléments sélectionnés parmi le groupe consistant en Ti, Ge, Sr, Zr, Sn et Al, Li₁₊ₓAlₓGe₂₋ₓ(PO₄)₃ où x se situe dans une plage de 0 ou plus à 0,5 ou moins, Li₁₊ₓAlₓZr₂₋ₓ(PO₄)₃ où x se situe dans une plage de 0 ou plus à 0,5 ou moins, et Li₁₊ₓAlₓTi₂₋ₓ(PO₄)₃ où x se situe dans une plage de 0 ou plus à 0,5 ou moins.

2. Batterie à électrolyte non aqueux selon la revendication 1, dans laquelle les particules secondaires de matériau actif d'électrode positive comprennent au moins un sélectionné parmi le groupe consistant en l'oxyde composite de lithium-manganèse, l'oxyde composite de lithium-nickel-cobalt-manganèse, l'oxyde composite de lithium-nickel-aluminium et le composé phosphate présentant une structure olivine.

3. Batterie à électrolyte non aqueux selon la revendication 1, dans laquelle les particules secondaires de matériau actif d'électrode positive contiennent du Mn et/ou du Fe.

4. Batterie à électrolyte non aqueux selon l'une quelconque des revendications 1 à 3, dans laquelle l'oxyde de lithium-titane est représenté par une formule chimique : Li_{4+σ}Ti₅O₁₂ où -0,5 ≤ σ ≤ 0,5.

5. Batterie à électrolyte non aqueux selon l'une quelconque des revendications 1 à 4, dans laquelle l'électrode négative (4) comprend un oxyde métallique contenant du titane.

6. Batterie à électrolyte non aqueux selon la revendication 5, dans laquelle l'oxyde métallique contenant du titane comprend au moins un élément sélectionné parmi le groupe consistant en un oxyde composite de lithium-titane, un oxyde de titane, un oxyde composite de niobium-titane et un oxyde composite contenant du sodium-niobium-titane.

7. Batterie à électrolyte non aqueux selon l'une quelconque des revendications 1 à 6, comprenant en outre un séparateur (5) faisant face à au moins une parmi l'électrode positive (3) et l'électrode négative (4).

8. Batterie à électrolyte non aqueux selon l'une quelconque des revendications 1 à 7, dans laquelle l'électrolyte non aqueux comprend un solvant organique et un sel de lithium dissous dans le solvant organique,
dans laquelle le solvant organique comprend au moins un élément sélectionné parmi le groupe consistant en du carbonate de propylène, du carbonate d'éthylène, du carbonate de diéthyle, du carbonate de diméthyle, du carbonate de méthyléthyle, du diméthoxyéthane, du diéthoxyéthane, du tétrahydrofurane, du dioxolane, de l'y-butyrolactone, de l'acétonitrile et du sulfolane, et
le sel de lithium comprend au moins un élément sélectionné parmi le groupe consistant en LiPF₆, LiClO₄, LiBF₄, LiCF₃SO₃, LiN(FSO₂)₂, LiN(CF₃SO₂)₂, LiAsF₆, LiN(C₂F₅SO₂)₂, Li(CF₃SO₂)₃C et LiB[(OCO)₂]₂.

9. Batterie à électrolyte non aqueux selon l'une quelconque des revendications 1 à 8, dans laquelle la distance la plus courte entre l'électrode positive (3) et l'électrode négative (4) va de 3 µm à 8 µm.

10. Bloc-batterie (50) comprenant la batterie à électrolyte non aqueux selon l'une quelconque des revendications 1 à 9.

11. Bloc-batterie (50) selon la revendication 10, comprenant en outre :
une borne (57) de distribution d'alimentation externe ; et
un circuit protecteur (56).

12. Bloc-batterie (50) selon la revendication 10, comprenant une pluralité des batteries à électrolyte non aqueux,
dans laquelle les batteries à électrolyte non aqueux sont électriquement connectées en série, en parallèle ou en une combinaison d'en série et d'en parallèle.

13. Véhicule (71) comprenant le bloc-batterie (50) selon l'une quelconque des revendications 10 à 12.

14. Véhicule (71) selon la revendication 13, dans lequel le bloc-batterie (50) est configuré pour récupérer une énergie régénérative d'une alimentation du véhicule (71).
